# EUROPEAN PATENT APPLICATION

(11) **EP 4 819 506 A1**
(43) Date of publication of application: **07.10.2026**
(21) Application number: 24898246.4
(22) Date of filing: 29.11.2024
(51) Int. Cl.: H04B 7/185, H04B 17/345, H04B 7/06, H04W 28/26, H04J 11/00, H04W 72/044, H04B 17/318, H04B 7/024

(54) **METHOD AND APPARATUS FOR COORDINATING AIR-GROUND INTERFERENCE ON BASIS OF GROUND NETWORK**

(30) Priority: 30.11.2023 KR 20230171612; 22.01.2024 KR 20240009620
(71) Applicant: LG Electronics Inc., Yeongdeungpo-gu Seoul 07336 (KR)
(72) Inventor: PARK, Hanjun, Seoul 06772 (KR); LEE, Seungmin, Seoul 06772 (KR); HWANG, Daesung, Seoul 06772 (KR)
(74) Representative: Mooser, Sebastian Thomas
(86) International application number: PCT/KR2024/019400
(87) International publication number: WO 2025/116654

(57) **Abstract**

A method of operating a first device (100) in a wireless communication system is proposed. The method comprises the steps of: obtaining information related to a cluster composed of a plurality of cells; and performing communication with a second base station (400) related to a second cell included in a first cluster including a first cell, wherein the information related to the cluster includes information related to the size of the cluster, wherein the size of the first cluster can be determined on the basis of the information related to the size of the cluster and an altitude of the first device (100).

## Description

### TECHNICAL FIELD

This disclosure relates to a wireless communication system.

### BACKGROUND ART

5G NR is the next generation technology of long term evolution (LTE) and is a new clean-slate form mobile communication system with high performance, low latency, and high availability. 5G NR may utilize all available spectrum resources, from the low frequency bands below 1 GHz to the mid-frequency bands from 1 GHz to 10 GHz and the high frequency (millimeter wave) bands above 24 GHz.

The 6G (wireless communication) system is aimed at (i) very high data rates per device, (ii) a very large number of connected devices, (iii) global connectivity, (iv) very low latency, (v) lowering energy consumption for battery-free internet of things (IoT) devices, (vi) ultra-reliable connectivity, and (vii) connected intelligence with machine learning capabilities. The vision of the 6G system may be in four aspects: intelligent connectivity, deep connectivity, holographic connectivity, and ubiquitous connectivity, and the 6G system may satisfy the requirements as shown in Table 1 below. For example, Table 1 may represent an example of the requirements of a 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

According to an embodiment of the present disclosure, a method that can be performed by a first device, may be proposed. The method may comprise: obtaining information related to a cluster composed of a plurality of cells; and performing communication with a second base station related to a second cell included in a first cluster including a first cell, wherein the information related to the cluster may include information related to a cluster size, and wherein the size of the first cluster may be determined based on the information related to the cluster size and an altitude of a first device.

According to an embodiment of the present disclosure, a first device may be proposed. For example, the first device may comprise: at least one transceiver; at least one processor; and at least one memory connected to the at least one processor and storing instructions. For example, the instructions, based on being executed by the at least one processor, may cause the first device to: obtain information related to a cluster composed of a plurality of cells; and perform communication with a second base station related to a second cell included in a first cluster including a first cell, wherein the information related to the cluster may include information related to a cluster size, and wherein the size of the first cluster may be determined based on the information related to the cluster size and an altitude of the first device.

According to an embodiment of the present disclosure, a processing device adapted to control a first device may be proposed. For example, the processing device may comprise: at least one processor; and at least one memory connected to the at least one processor and storing instructions, wherein the instructions, based on being executed by the at least one processor, may cause the first device to: obtain information related to a cluster composed of a plurality of cells; and perform communication with a second base station related to a second cell included in a first cluster including a first cell, wherein the information related to the cluster may include information related to a cluster size, and wherein the size of the first cluster may be determined based on the information related to the cluster size and an altitude of the first device.

According to an embodiment of the present disclosure, a non-transitory computer-readable storage medium storing instructions that, based on being executed, cause a first device to: obtain information related to a cluster composed of a plurality of cells; and perform communication with a second base station related to a second cell included in a first cluster including a first cell, wherein the information related to the cluster may include information related to a cluster size, and wherein the size of the first cluster may be determined based on the information related to the cluster size and an altitude of the first device.

According to an embodiment of the present disclosure, a method that can be performed by a second device may be proposed. For example, the method may comprise: transmitting, to a first device, information related to a cluster composed of a plurality of cells; and performing communication with the first device, wherein the communication may be performed by a first base station related to a first cell included in a first cluster, wherein the information related to the cluster may include information related to a cluster size, and wherein a size of the first cluster may be determined based on the information related to the cluster size and an altitude of the first device.

According to an embodiment of the present disclosure, a second device may be proposed. For example, the second device may comprise: at least one transceiver; at least one processor; and at least one memory connected to the at least one processor and storing instructions. For example, the instructions, based on being executed by the at least one processor, may cause the second device to: transmit, to a first device, information related to a cluster composed of a plurality of cells; and perform communication with the first device, wherein the communication may be performed by a first base station related to a first cell included in a first cluster, wherein the information related to the cluster may include information related to a cluster size, and wherein a size of the first cluster may be determined based on the information related to the cluster size and an altitude of the first device.

### BRIEF DESCRIPTION OF THE DRAWINGS

FIG. 1 shows a communication structure that can be provided in a 6G system, according to one embodiment of the present disclosure.
FIG. 2 shows an electromagnetic spectrum, according to one embodiment of the present disclosure.
FIG. 3 shows an example of an NTN typical scenario based on a transparent payload, according to one embodiment of the present disclosure.
FIG. 4 shows an example of an NTN typical scenario based on a regenerative payload, according to one embodiment of the present disclosure.
FIG. 5 shows an example of a sensing operation, according to one embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a resource allocation mode, based on an embodiment of the present disclosure.
FIG. 9 shows a synchronization source or a synchronization reference of V2X according to an embodiment of the present disclosure.
FIG. 10 shows a transmission spatial filter and a reception spatial filter, according to one embodiment of the present disclosure.
FIG. 11 shows a method for determining whether a reception spatial filter covers a transmission spatial filter, according to one embodiment of the present disclosure.
FIG. 12 shows a cluster configured/defined for a service for an aerial UE according to an embodiment of the present disclosure.
FIG. 13 shows a configuration for a serving cell within a cluster for an aerial UE according to an embodiment of the present disclosure.
FIG. 14 shows an operation for configuring a UE-to-base station communication beam (e.g., an uplink beam) (or a spatial filter) of an aerial UE according to an embodiment of the present disclosure.
FIG. 15 shows an operation for configuring a UE-to-base station communication beam (e.g., an uplink beam) (or a spatial filter) of an aerial UE according to an embodiment of the present disclosure.
FIG. 16 may show a sensing-based UE-to-base station communication (e.g., uplink) interference coordination method (or operation) according to an embodiment of the present disclosure.
FIG. 17 shows a sensing-based base station-to-UE communication (e.g., downlink) interference coordination method (or operation) according to an embodiment of the present disclosure.
FIG. 18 shows a procedure of operations that may be performed by a first device according to an embodiment of the present disclosure.
FIG. 19 shows a procedure of operations that may be performed by a second device according to an embodiment of the present disclosure.
FIG. 20 shows a communication system 1, based on an embodiment of the present disclosure.
FIG. 21 shows wireless devices, based on an embodiment of the present disclosure.
FIG. 22 shows a signal process circuit for a transmission signal, based on an embodiment of the present disclosure.
FIG. 23 shows another example of a wireless device, based on an embodiment of the present disclosure.
FIG. 24 shows a hand-held device, based on an embodiment of the present disclosure.
FIG. 25 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, parentheses used in the present specification may mean "for example." Specifically, when indicated as "control information (PDCCH)," "PDCCH" may be proposed as an example of "control information." In other words, "control information" in the present specification is not limited to "PDCCH," and "PDCCH" may be proposed as an example of "control information." In addition, even when indicated as "control information (e.g., PDCCH)," "PDCCH" may be proposed as an example of "control information."

In the following description, "when, if, in case of" may be replaced with "based on."

In the present specification, a device obtaining information may include that the information is (pre-)configured for the device, that the information is received by the device from another entity, and that the device generates the information.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In this specification, being "configured or defined" may be interpreted as being configured or pre-configured to a device via predefined signaling (e.g., SIB, MAC, RRC) from a base station or network. In this specification, being "configured or defined" may be interpreted as being pre-configured to a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

The technologies proposed in this specification may be implemented in 6G wireless technologies and may be applied to various 6G systems. For example, 6G systems may include key factors such as enhanced mobile broadband (eMBB), ultra-reliable low latency communications (URLLC), massive machine-type communication (mMTC), artificial intelligence (AI) integrated communication, tactile internet, and high throughput, high network capacity, high energy efficiency, low backhaul and access network congestion, and enhanced data security.

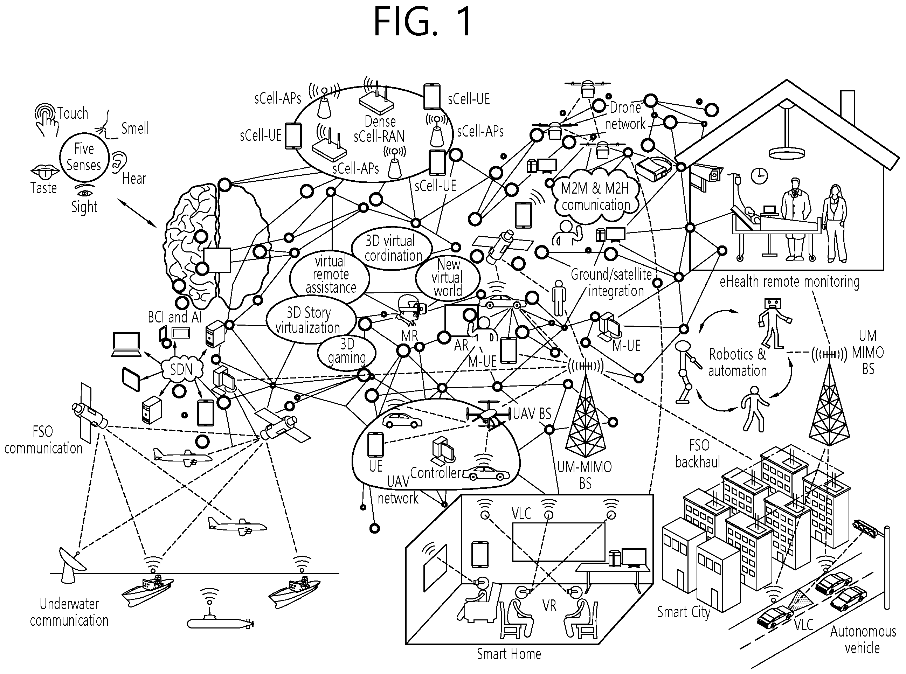

FIG. 1 shows a communication structure that can be provided in a 6G system, according to one embodiment of the present disclosure. The embodiment of FIG. 1 may be combined with various embodiments of the present disclosure.

In 6G, new network features may include the following.
- Satellites integrated network
- Connected intelligence: Unlike previous generations of wireless communication systems, 6G is revolutionary and the wireless evolution will be updated from "connected things" to "connected intelligence". AI can be applied at each step of the communication procedure (or each step of signal processing, as will be described later).
- Seamless integration wireless information and energy transfer
- Ubiquitous super 3D connectivity: Super 3D connection will be generated from 6G ubiquity to access networks and core network functions on drones and very low Earth orbit satellites.

Given the above new network characteristics of 6G, some common requirements may be as follows
- Small cell networks
- Ultra-dense heterogeneous network
- High-capacity backhaul
- Radar technology integrated with mobile technology: High-precision localization (or location-based services) through communication is one of the features of 6G wireless communication systems. Therefore, radar systems will be integrated with 6G networks.
- Softwarization and virtualization

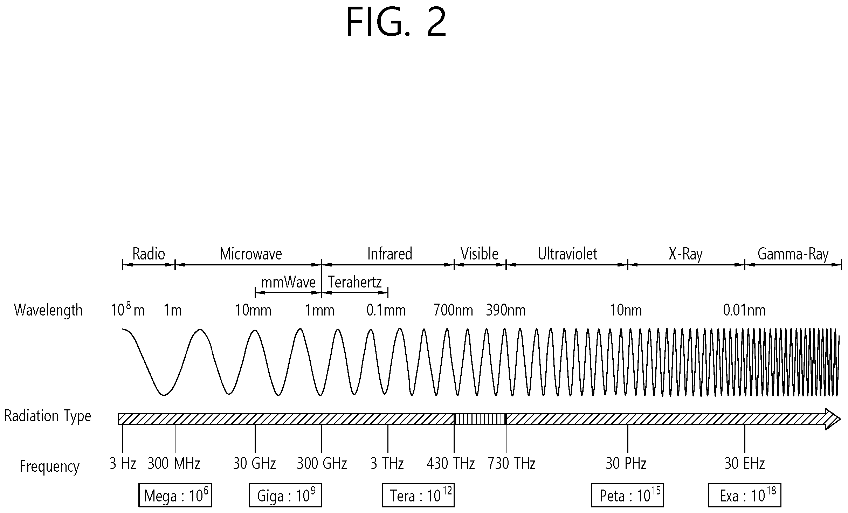

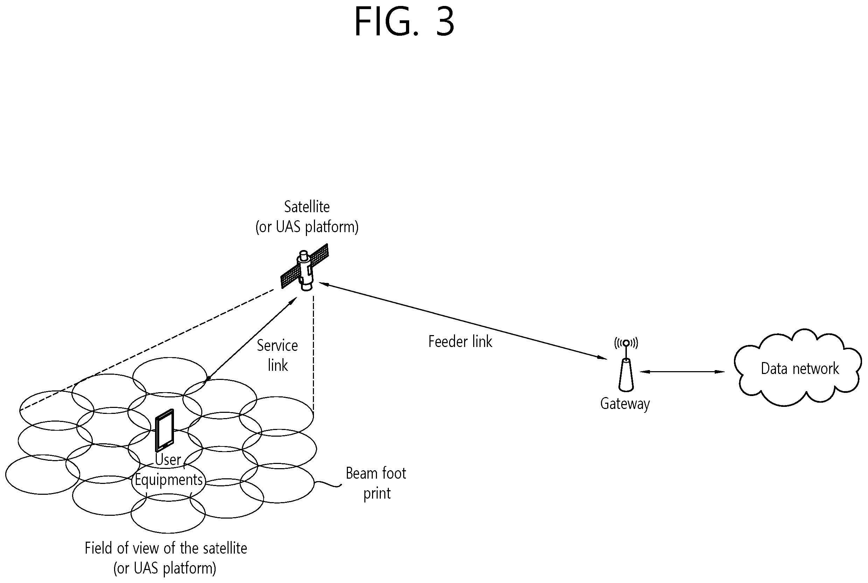

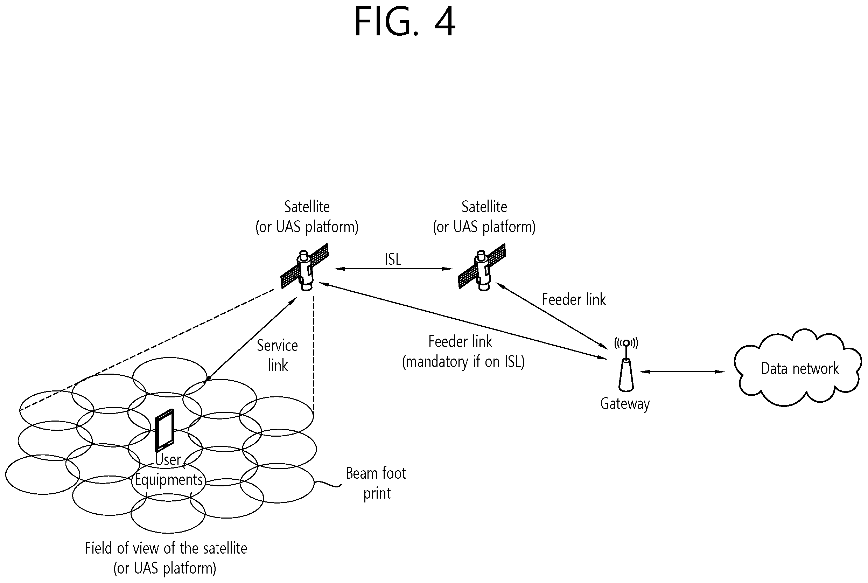

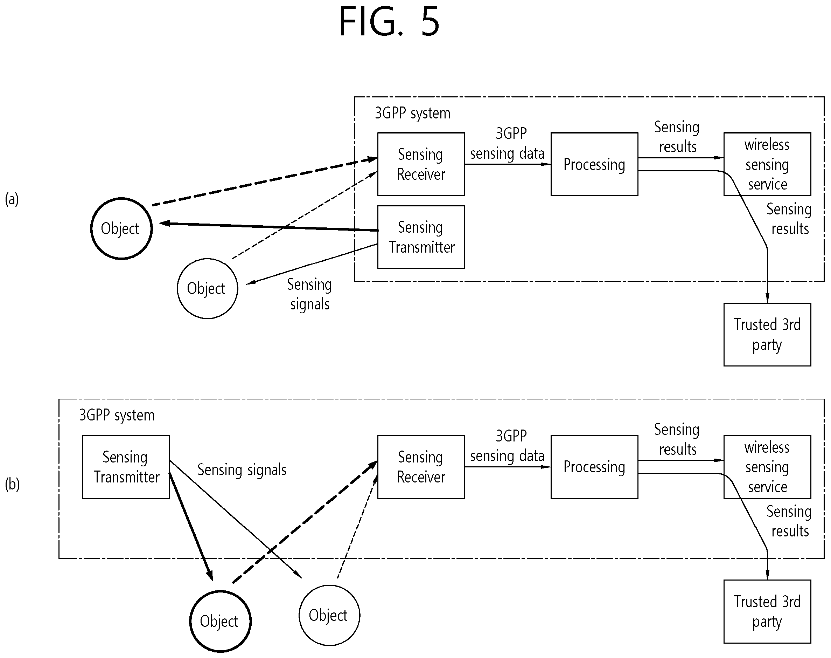

The following describes the core implementation technologies for 6G systems.
- Artificial intelligence: Introducing AI into telecommunications may simplify and improve real-time data transmission. AI may use numerous analytics to determine the way complex target tasks are performed, which means AI may increase efficiency and reduce processing delays. Time-consuming tasks such as handover, network selection, and resource scheduling may be performed instantly by using AI. AI may also play an important role in machine-to-machine, machine-to-human, and human-to-machine communication. AI may also be a rapid communication in brain computer interface (BCI). AI-based communication systems may be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO
- HBF, Hologram Beamforming
- Optical wireless technology
- FSO Backhaul Network
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- UAV, Unmanned Aerial Vehicle: Unmanned aerial vehicles (UAVs), or drones, will be an important component of 6G wireless communications. In most cases, high-speed data wireless connection is provided using UAV technology. A BS entity is installed on a UAV to provide cellular connection. UAVs have specific features not found in fixed BS infrastructure, such as easy deployment, strong line-of-sight links, and freedom of controlled mobility. During emergencies, such as natural disasters, the deployment of terrestrial communication infrastructure is not economically feasible and sometimes cannot provide services in volatile environments. UAVs can easily handle these situations. UAVs will be a new paradigm in wireless communications. This technology facilitates three basic requirements of wireless networks: eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Advanced air mobility, AAM: AAM is the higher-level concept of urban air mobility (UAM), which refers to air transportation in urban centers, and may include travel between urban centers and regional hubs.
- Autonomous driving, self-driving: Vehicle to everything (V2X), a key element in building an autonomous driving infrastructure, may be a technology that allows cars to communicate and share with various elements on the road to drive autonomously, such as vehicle to vehicle (V2V) and vehicle to infrastructure (V2I). To maximize the performance of autonomous driving and ensure high safety, fast transmission speeds and low latency technologies are essential. In addition, in the future, autonomous driving may need to go beyond delivering warnings and intervene actively in vehicle operations and take control of the vehicle in dangerous situations. To do so, the amount of information that needs to be transmitted and received may be enormous, and in 6G, faster transmission speeds and lower latency than 5G are expected to maximize autonomous driving.
- Non-terrestrial networks, NTN: An NTN may represent a network or network segment that uses radio frequency (RF) resources aboard a satellite (or unmanned aerial system (UAS) platform). FIG. 3 shows an example of an NTN typical scenario based on a transparent payload, according to one embodiment of the present disclosure. FIG. 4 shows an example of an NTN typical scenario based on a regenerative payload, according to one embodiment of the present disclosure. The embodiments of FIG. 3 or FIG. 4 may be combined with various embodiments of the present disclosure. Referring to FIG. 3, a satellite (or UAS platform) may establish a service link with a UE. The satellite (or UAS platform) may be connected to a gateway via a feeder link. The satellite may be connected to the data network via a gateway. A beam footprint may refer to an area where signals transmitted by a satellite can be received. Referring to FIG. 4, a satellite (or UAS platform) may establish a service link with a UE. A satellite (or UAS platform) connected to a UE may be connected to other satellites (or UAS platforms) via inter-satellite links (ISLs). The other satellites (or UAS platforms) may be connected to a gateway via feeder links. Based on the regenerative payload, the satellite may be connected to the data network via other satellites and a gateway. If an ISL does not exist between the satellite and another satellite, a feeder link between the satellite and a gateway may be required. FIG. 3 and FIG. 4 are just examples of NTN scenarios, and NTN may be implemented based on scenarios in many different ways. For example, a satellite (or UAS platform) may implement a transparent or regenerative (with on board processing) payload. For example, the satellite (or UAS platform) may generate multiple beams over a service area designated based on the field of view of the satellite (or UAS platform). For example, the field of view of the satellite (or UAS platform) may vary depending on the on-board antenna diagram and the minimum elevation angle. For example, a transparent payload may include radio frequency filtering, frequency conversion, and amplification. Thus, the waveform signal repeated by the payload may not be changed. For example, a regenerative payload may include radio frequency filtering, frequency conversion and amplification, demodulation/decoding, switching and/or routing, and coding/modulation. For example, a regenerative payload may be substantially equivalent to carrying all or part of a base station's functionality on board a satellite (or UAS platform).
- Integrated sensing and communication, ISAC: Wireless sensing is a technology that uses radio frequencies to determine an object's instantaneous linear velocity, angle, distance (range), etc. to obtain information about an environment and/or the properties of an object in the environment. Since radio frequency sensing function does not require connecting to an object through a device in the network, it may provide a service for object positioning without a device. The ability to obtain range, velocity, and angle information from radio frequency signals can provide a wide range of new capabilities, such as detection of various objects, object recognition (e.g., vehicles, humans, animals, UAVs), and high-precision positioning, tracking, and activity recognition. Wireless sensing services may provide information to a variety of industries (e.g., unmanned aerial vehicles, smart homes, V2X, factories, railroads, public safety, etc.) enabling applications that provide, for example, intruder detection, assisted vehicle steering and navigation, trajectory tracking, conflict avoidance, traffic management, health and transportation management, and more. In some cases, wireless sensing may utilize non-3GPP type sensors (e.g., radar, cameras) to further support 3GPP-based sensing. For example, the operation of a wireless sensing service, e.g., the sensing operation, may rely on handling the transmission, reflection, and scattering of wireless sensing signals. Thus, wireless sensing may provide an opportunity to enhance existing communication systems from telecommunication networks to wireless communication and sensing networks. FIG. 5 shows an example of a sensing operation, according to one embodiment of the present disclosure. The embodiment of FIG. 5 may be combined with various embodiments of the present disclosure. Specifically, (a) of FIG. 5 shows an example of sensing using a sensing receiver and a sensing transmitter that are co-located (e.g., monostatic sensing), and (b) of FIG. 5 shows an example of sensing using separate sensing receivers and sensing transmitters (e.g., bistatic sensing).

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

A physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, e.g., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, e.g., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (e.g., the physical layer or the PHY layer) and the second layer (e.g., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, e.g., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

In the NR, a radio frame may be used for performing uplink and downlink transmission. A radio frame has a length of 10ms and may be defined to be configured of two half-frames (HFs). A half-frame may include five 1ms subframes (SFs). A subframe (SF) may be spread into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot (N^{slot}_{symb}), the number of slots per frame (N^{frame,u}ₛₗₒₜ), and the number of slots per subframe (N^{subframe,u}ₛₗₒₜ), according to an SCS configuration (u), when Normal CP or Extended CP is used.

**[Table 2]**

| CP Type | SCS (15*2^{u}) | N^{slot}_{symb} | N^{frame,u}ₛₗₒₜ | N^{subframe,u}ₛₗₒₜ |
|---|---|---|---|---|
| Normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| Extended CP | 60kHz (u=2) | 12 | 40 | 4 |

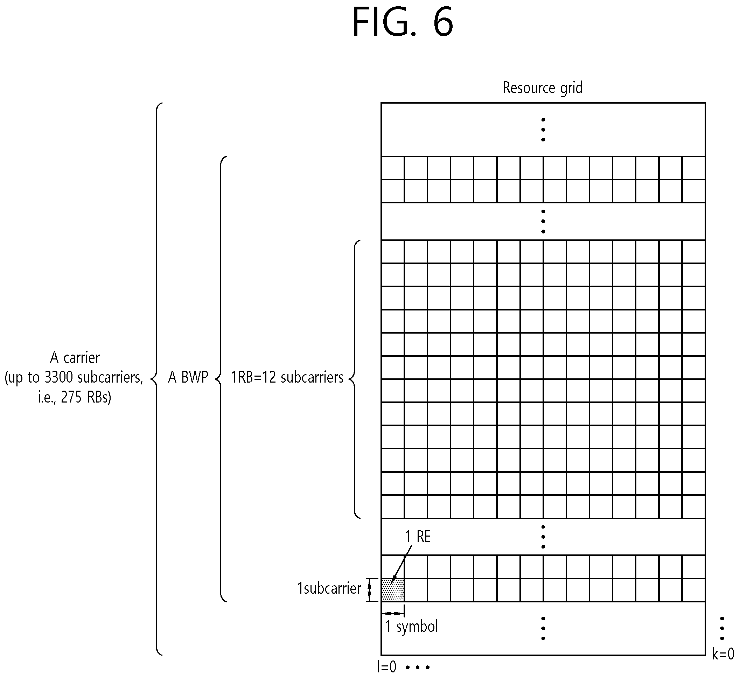

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain.

A carrier may include a maximum of N number BWPs (e.g., 5 BWPs). Data communication may be performed via an activated BWP. Each element may be referred to as a Resource Element (RE) within a resource grid and one complex symbol may be mapped to each element.

The BWP may be a set of consecutive physical resource blocks (PRBs) in a given numerology. The PRB may be selected from consecutive sub-sets of common resource blocks (CRBs) for the given numerology on a given carrier

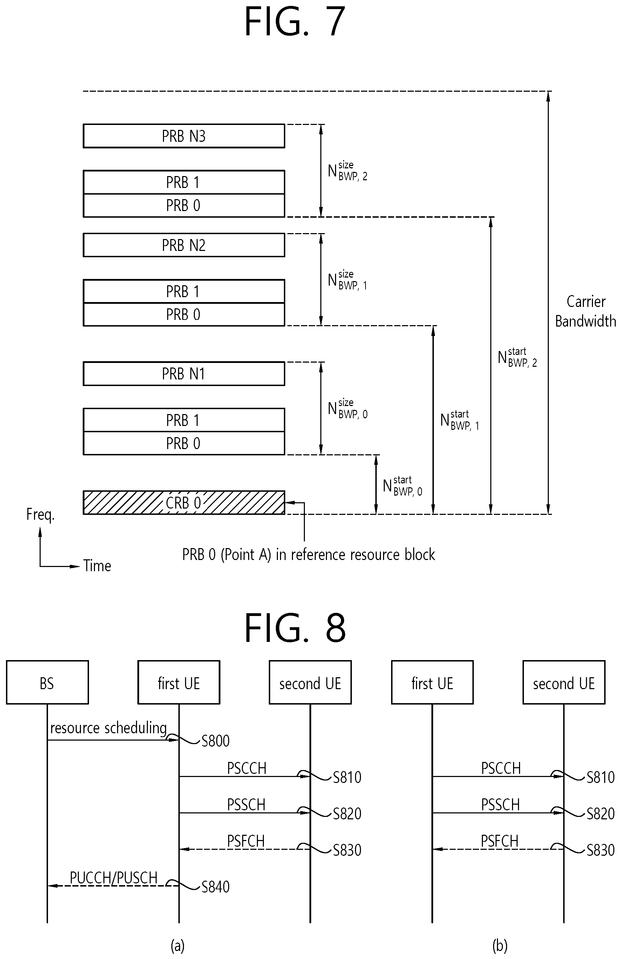

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (e.g., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In this specification, a PSCCH may be replaced by a control channel, a physical control channel, a control channel related to a sidelink, a physical control channel related to a sidelink, etc. In this specification, a PSSCH may be replaced by a shared channel, a physical shared channel, a shared channel related to a sidelink, a physical shared channel related to a sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1^{st}-stage SCI) to a second UE based on the resource scheduling. In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be DCI for scheduling of SL.

Referring to (b) of FIG. 8, in resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1^{st}-stage SCI) to a second UE by using the resource(s). In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format.

Referring to (a) or (b) of FIG. 8, in a step S830, a first UE may receive a PSFCH. For example, a first UE and a second UE may determine a PSFCH resource, and a second UE may transmit HARQ feedback to a first UE using a PSFCH resource.

Referring to (a) of FIG. 8, in a step S840, a first UE may transmit SL HARQ feedback to a base station through a PUCCH and/or a PUSCH.

Hereinafter, obtain of synchronization of an SL UE will be described. For example, an SL UE may refer to a UE that performs inter-UE communication (e.g., SL communication).

In a time division multiple access (e.g., TDMA; time division multiple access) system and a frequency division multiple access (e.g., FDMA; frequency division multiple access) system, accurate time and frequency synchronization is essential. If time and frequency synchronization is not accurately achieved, system performance may be degraded due to inter symbol interference (ISI) and inter carrier interference (ICI). This also applies to V2X. In V2X, for time/frequency synchronization, an inter-UE synchronization signal (e.g., an SL synchronization signal; sidelink synchronization signal, SLSS) may be used in a physical layer, and a master information block-sidelink-V2X (MIB-SL-V2X) may be used in a radio link control (RLC) layer.

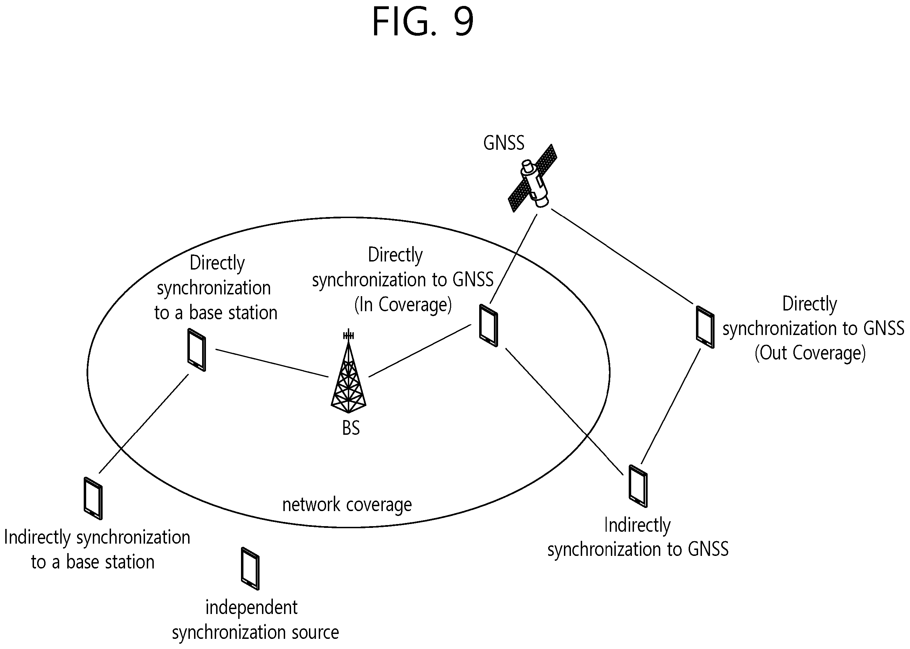

FIG. 9 shows a synchronization source or a synchronization reference of V2X according to an embodiment of the present disclosure. The embodiment of FIG. 9 may be combined with various embodiments of the present disclosure.

Referring to FIG. 9, in V2X, a UE may be directly synchronized to global navigation satellite systems (GNSS), or may be indirectly synchronized to GNSS through a UE (within network coverage or outside network coverage) that is directly synchronized to GNSS. When GNSS is configured as a synchronization source, a UE may calculate a DFN and a subframe number by using coordinated universal time (UTC) and a (pre-)configured direct frame number (DFN) offset.

Alternatively, a UE may be directly synchronized to a base station, or may be synchronized to another UE that is time/frequency synchronized to the base station. For example, the base station may be an eNB or a gNB. For example, when a UE is within network coverage, the UE may receive synchronization information provided by the base station and may be directly synchronized to the base station. Thereafter, the UE may provide synchronization information to another adjacent UE. When base station timing is configured as a synchronization reference, a UE may follow a cell associated with a corresponding frequency (when the UE is within cell coverage at the frequency), or a primary cell or a serving cell (when the UE is outside cell coverage at the frequency), for synchronization and downlink measurement.

A base station (for example, a serving cell) may provide a synchronization configuration for a carrier used for V2X or inter-UE communication (e.g., SL communication). In this case, a UE may follow the synchronization configuration received from the base station. If a UE does not detect any cell on the carrier used for the V2X or SL communication and does not receive a synchronization configuration from the serving cell, the UE may follow a preconfigured synchronization configuration.

Alternatively, a UE may be synchronized to another UE that does not obtain synchronization information directly or indirectly from a base station or GNSS. A synchronization source and a preference may be preconfigured for a UE. Alternatively, a synchronization source and a preference may be configured through a control message provided by a base station.

An SL synchronization source may be associated with a synchronization priority. For example, a relationship between a synchronization source and a synchronization priority may be defined as shown in Table 3 or Table 4 below. Table 3 or Table 4 is merely an example, and the relationship between a synchronization source and a synchronization priority may be defined in various forms.

**[Table 3]**

| Priority level | GNSS-based synchronization | eNB/gNB-based synchronization |
|---|---|---|
| P0 | GNSS | Base station |
| P1 | Every UE directly synchronized to GNSS | Every UE directly synchronized to a base station |
| P2 | Every UE indirectly synchronized to GNSS | Every UE indirectly synchronized to base station |
| P3 | Every other UE | GNSS |
| P4 | N/A | Every UE directly synchronized to GNSS |
| P5 | N/A | Every UE indirectly synchronized to GNSS |
| P6 | N/A | Every other UE |

**[Table 4]**

| Priority level | GNSS-based synchronization | eNB/gNB-based synchronization |
|---|---|---|
| P0 | GNSS | Base station |
| P1 | Every UE directly synchronized to GNSS | Every UE directly synchronized to a base station |
| P2 | Every UE indirectly synchronized to GNSS | Every UE indirectly synchronized to base station |
| P3 | Base station | GNSS |
| P4 | Every UE directly synchronized to a base station | Every UE directly synchronized to GNSS |
| P5 | Every UE indirectly synchronized to base station | Every UE indirectly synchronized to GNSS |
| P6 | Remaining UE(s) with lower priority | Remaining UE(s) with lower priority |

In Table 3 or Table 4, P0 may mean a highest priority, and P6 may mean a lowest priority. In Table 3 or Table 4, a base station may include at least one of a gNB or an eNB.

Whether to use GNSS-based synchronization or base station-based synchronization may be (pre-)configured. In a single-carrier operation, a UE may derive transmission timing of the UE from an available synchronization reference having a highest priority.

Meanwhile, each inter-UE synchronization signal (e.g., SLSS) may have an inter-UE synchronization identifier (e.g., an SL synchronization identifier; Sidelink Synchronization Identifier, SLSS ID).

For example, in LTE inter-UE communication (e.g., SL communication) or LTE V2X, a value of an inter-UE synchronization signal identifier (e.g., SLSS) may be defined based on a combination of two different inter-UE primary synchronization signal (e.g., S-PSS) sequences and 168 different inter-UE secondary synchronization signal (e.g., S-SSS) sequences. For example, a number of inter-UE synchronization signal identifiers (e.g., SLSS) may be 336. For example, a value of an inter-UE synchronization signal identifier (e.g., SLSS) may be one of 0 to 335.

For example, in the case of NR inter-UE communication (e.g., SL communication) or NR V2X, a value of an inter-UE synchronization signal identifier (e.g., SLSS) may be defined based on a combination of 2 different inter-UE primary synchronization signal (e.g., S-PSS) sequences and 336 different inter-UE secondary synchronization signal (e.g., S-SSS) sequences. For example, the number of inter-UE synchronization signal identifiers (e.g., SLSS) may be 672. For example, a value of an inter-UE synchronization signal identifier (e.g., SLSS) may be any one of 0 to 671. For example, among the 2 different inter-UE primary synchronization signals (e.g., S-PSS), one inter-UE primary synchronization signal (e.g., S-PSS) may be associated with in-coverage, and the other inter-UE primary synchronization signal (e.g., S-PSS) may be associated with out-of-coverage. For example, inter-UE synchronization signal identifiers (e.g., SLSS) of 0 to 335 may be used in in-coverage, and inter-UE synchronization signal identifiers (e.g., SLSS) of 336 to 671 may be used in out-of-coverage.

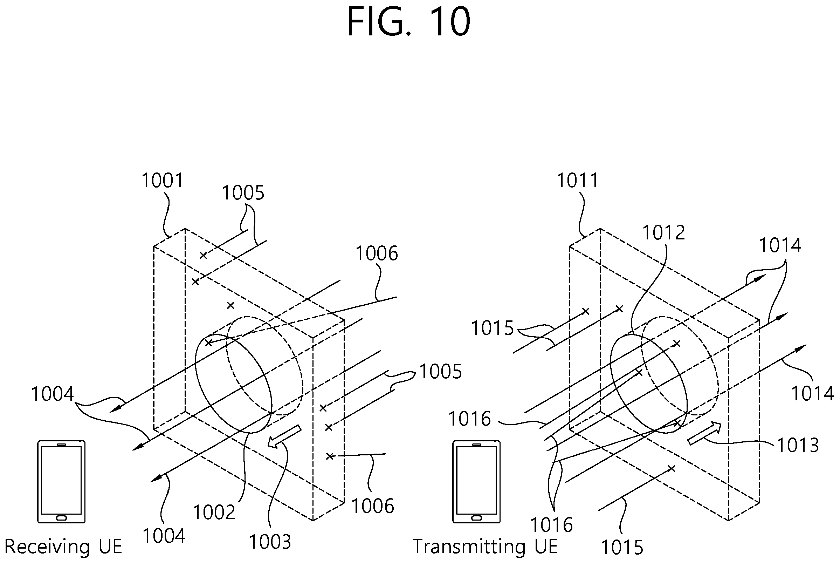

FIG. 10 shows a transmission spatial filter and a reception spatial filter, according to one embodiment of the present disclosure. The embodiment of FIG. 10 may be combined with various embodiments of the present disclosure.

Referring to FIG. 10, a reception spatial filter 1001 used by a receiving UE for a reception operation and a transmission spatial filter 1011 used by a transmitting UE for a transmission operation are shown.

For example, a reception spatial filter may only pass signals with the same beam direction as 1003. For example, the receiving UE may only receive a transmission performed based on a beam with the direction of 1003.

Thus, transmissions of 1006 transmitted based on a beam with a different beam direction than the beam direction of 1003 may not pass the reception spatial filter. 1004 is a signal transmitted based on a beam with the same beam direction as 1003, which may pass the reception spatial filter and be received by a receiving UE.

For example, a reception spatial filter may have a beam size/width of 1002 and may only pass signals that are performed based on a beam that is included within the beam size/width. For example, a receiving UE may only receive transmissions that are performed based on a beam with a size/width that is included within the beam size/width of 1002.

Thus, transmissions of 1005 that contacted the reception spatial filter outside of the size/width of 1002 may not pass the reception spatial filter among signal components transmitted based on a beam of a size/width greater than the size/width of 1002. Since 1004 has contacted the reception spatial filter in a region included in the size/width of 1002, it may pass through the reception spatial filter and be received by a receiving UE. On the other hand, 1005 has contacted the reception spatial filter outside of the size/width of 1002, and therefore cannot pass the reception spatial filter and cannot be received by the receiving UE.

For example, 1004 may be received by the receiving UE since its direction is the same as the direction of the beam 1003 through which the reception spatial filter passes, and since it contacts the reception spatial filter in a range that is included in the size/width of 1002. Here, for example, if the transmissions of 1004 are all of the transmitted components based on a specific beam (e.g., all of the signal components transmitted along with 1004 are successfully received by the receiving UE), then the reception spatial filter may be a spatial filter that covers the transmission spatial filter related to the specific beam.

For example, a transmission spatial filter may only pass signals that are the same as the beam direction of 1013. In other words, when a transmission UE performs a transmission operation based on the transmission spatial filter, the signal components 1014 that pass through the transmission spatial filter and are finally transmitted may all have the direction of 1013.

Thus, transmissions of 1016 transmitted based on a beam that is different from the beam direction of 1013 may not pass through the transmission spatial filter. Signal components 1014 with the same beam direction as 1013 may pass through the transmission spatial filter and be transmitted to a receiving UE.

For example, a transmission spatial filter may have a beam size/width of 1012, and may only pass signal components that are included within the beam size/width. For example, when a transmission UE performs a transmission operation based on the transmission spatial filter, only signal components that are included within the beam size/width of 1012 may be passed through the transmission spatial filter and finally transmitted.

Thus, signal components that are not included in the size/width of 1012 may not pass through the transmission spatial filter. Since 1014 are signal components that are included in the size/width of 1012, they may pass through the transmission spatial filter and be transmitted to a receiving UE. On the other hand, 1015 are signal components that are not included in the size/width of 1012 and therefore cannot pass through the transmission spatial filter and be transmitted to the receiving UE.

For example, the direction of 1014 is the same as the beam direction 1013 through which the transmission spatial filter passes, and the signal components included in the size/width of 1012, it may be transmitted to a receiving UE. Here, for example, if the transmissions of 1014 all pass through a reception spatial filter used by a receiving UE for receive operation (e.g., if the direction of the signal components of 1014 is the same as the beam direction related to the reception spatial filter, and the signal components of 1014 are all included in the size/width of the reception spatial filter), then the reception spatial filter may be a spatial filter that covers the transmission spatial filter of 1011.

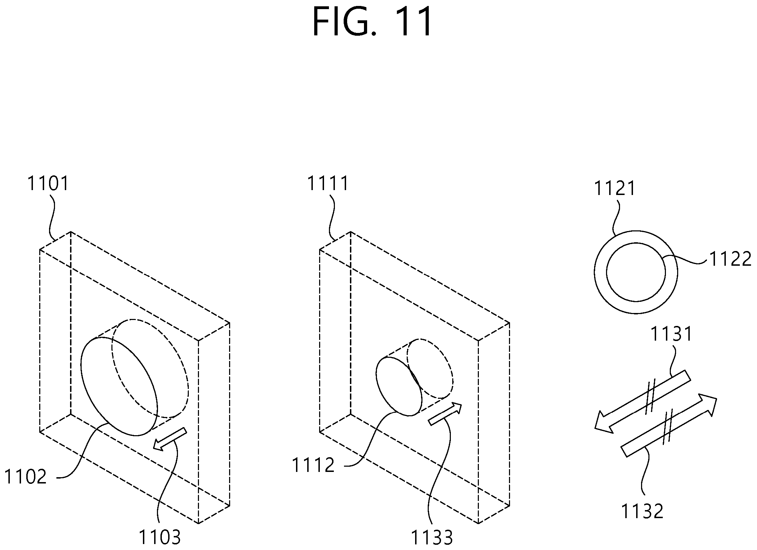

FIG. 11 shows a method for determining whether a reception spatial filter covers a transmission spatial filter, according to one embodiment of the present disclosure. The embodiment of FIG. 11 may be combined with various embodiments of the present disclosure.

Referring to FIG. 11, a reception spatial filter 1101 used by a receiving UE for a reception operation and a transmission spatial filter 1111 used by a transmitting UE for a transmission operation are shown.

For example, the direction of the signal components passed by the reception spatial filter may be 1103, and the direction of the signal components transmitted through the transmission spatial filter may be 1113. For example, the reception beam direction related to the reception spatial filter may be 1103, and the transmission beam direction related to the transmission spatial filter may be 1113.

For example, the size/width of the reception filter may be 1102. For example, the reception spatial filter passes only those signals components included in the 1102, and only those signal components that pass through the reception spatial filter may be received by a receiving UE.

For example, the size/width of the transmission spatial filter may be 1112. For example, the transmission spatial filter passes only those signals components included in the 1112, and only those signal components that pass through the transmission spatial filter may be transmitted to a receiving UE.

1121 and 1122 are cross sections of the size/width of a transmission spatial filter or the size/width of a reception spatial filter.

For example, if the 1121 is the size/width of a transmission spatial filter, the 1122 is the size/width of a reception spatial filter, and since the 1122 is included in the 1121, the size/width of the transmission spatial filter is larger than the size/width of the reception spatial filter, some of the signal components that pass through the transmission spatial filter and are transmitted to a receiving UE may not pass through the reception spatial filter. In this case, the reception spatial filter may be a spatial filter that does not cover the transmission spatial filter.

Conversely, for example, if the 1121 is the size/width of a reception spatial filter, the 1122 is the size/width of a transmission spatial filter, and since the 1122 is included in the 1121, the size/width of the transmission spatial filter is smaller than the size/width of the reception spatial filter, all of the signal components transmitted through the transmission spatial filter to a receiving UE may pass through the reception spatial filter. In this case, the reception spatial filter may be a spatial filter that covers the transmission spatial filter.

1131 represents 1103, e.g., the reception beam direction related to the reception spatial filter, and 1132 represents 1113, e.g., the transmission beam direction related to the transmission spatial filter. For example, as shown in the figure, since only when 1131 and 1132 are horizontal may all signal components transmitted by a transmitting UE based on the transmitting spatial filter pass through a receiving spatial filter, the receiving spatial filter may be the to be a spatial filter that covers the transmitting spatial filter when all signal components transmitted by the transmitting UE based on the transmitting spatial filter pass through the receiving spatial filter only when 1131 and 1132 are horizontal.

As technologies related to an unmanned aerial vehicle (UAV) and/or a drone (hereinafter, referred to as a UAV) have been rapidly developing, research on utilizing a UAV as a communication node in a mobile communication system has been actively conducted in the mobile communication field. For example, a UAV may perform a role of a relay node that provides a communication service in the mobile communication system and/or a role of a UE that is provided with a communication service in the mobile communication system.

For example, a UAV may refer to a communication UE that can be mounted on (or is mounted on) a transportation means that can be operated without a driver (or can be operated by a driver). For example, a UAV UE may refer to a communication UE that can be mounted on (or is mounted on) a transportation means that can be operated without a driver (or can be operated by a driver).

Here, when the aerial UE is served by a terrestrial network, unlike a conventional wireless environment in which (the terrestrial network) serves only a terrestrial UE, a new type of UE-to-base station communication (e.g., uplink) interference and/or base station-to-UE communication (e.g., downlink) interference may be caused. For example, a UE-to-base station signal (e.g., an uplink signal) transmitted by the aerial UE to a (terrestrial) base station (or a cell) may act as UE-to-base station communication (e.g., uplink) interference to another (terrestrial) base station (or cell)(s) other than a (terrestrial) base station (or a cell) serving the aerial UE (e.g., air-to-ground interference). For example, a UE-to-base station signal (e.g., an uplink signal) transmitted by the aerial UE to a (terrestrial) base station (or a cell) may cause UE-to-base station communication (e.g., uplink) interference to another (terrestrial) base station (or cell)(s) other than a (terrestrial) base station (or a cell) serving the aerial UE (e.g., air-to-ground interference). For example, a UE-to-base station signal (e.g., an uplink signal) transmitted by the aerial UE to a (terrestrial) base station (or a cell) may be UE-to-base station communication (e.g., uplink) interference to another (terrestrial) base station (or cell)(s) other than a (terrestrial) base station (or a cell) serving the aerial UE (e.g., air-to-ground interference).

Alternatively, for example, a base station-to-UE communication (e.g., downlink) signal transmitted by a (terrestrial) base station (or a cell) to an aerial UE and/or a terrestrial UE may act as base station-to-UE communication (e.g., downlink) interference to another aerial UE other than a UE served by the (terrestrial) base station (or the cell) (e.g., ground-to-air interference). For example, a base station-to-UE communication (e.g., downlink) signal transmitted by a (terrestrial) base station (or a cell) to an aerial UE and/or a terrestrial UE may cause base station-to-UE communication (e.g., downlink) interference to another aerial UE other than a UE served by the (terrestrial) base station (or the cell) (e.g., ground-to-air interference). For example, a base station-to-UE communication (e.g., downlink) signal transmitted by a (terrestrial) base station (or a cell) to an aerial UE and/or a terrestrial UE may be base station-to-UE communication (e.g., downlink) interference to another aerial UE other than a UE served by the (terrestrial) base station (or the cell) (e.g., ground-to-air interference).

Accordingly, (in order to solve a problem in which interference occurs), the present disclosure proposes a method for coordinating the air-to-ground interference when serving an aerial UE and/or a terrestrial UE through a terrestrial network.

### [Proposal #01]

According to an embodiment of the present disclosure, a cluster composed of a plurality of cells may be (pre-)configured and/or (pre-)defined by a network for a UE, and in this case, a cluster(s) for one or more of the following purposes may be (pre-)configured and/or (pre-)defined. For example, according to this embodiment, a cluster(s) (pre-)configured and/or (pre-)defined may be for one or more of the following purposes. For example, a cluster may refer to a set composed of a plurality of cells and/or a larger unit (super) cell composed of a plurality of cells.
(1) service discovery purpose
(2) a purpose of coordinating UE-to-base station communication (e.g., uplink) interference (or a purpose of coordinating air-to-ground interference)
(3) a purpose of coordinating base station-to-UE communication (e.g., downlink) interference (or a purpose of coordinating ground-to-air interference)

Here, the UE-to-base station communication (e.g., uplink) interference (or air-to-ground interference) may refer to interference (or an effect) of UE-to-base station communication (e.g., uplink) of an aerial UE on UE-to-base station communication (e.g., uplink) of a terrestrial UE and/or (another) aerial UE.

Here, the base station-to-UE communication (e.g., downlink) interference (or ground-to-air interference) may refer to interference (or an effect) of base station-to-UE communication (e.g., downlink) of a terrestrial UE and/or an aerial UE on base station-to-UE communication (e.g., downlink) of (another) aerial UE.

Here, the network may independently (pre-)configure and/or (pre-)define a cluster for each purpose, or may (pre-)configure and/or (pre-)define the same cluster for a plurality of purposes. For example, when a cluster for another purpose other than a cluster for a service discovery purpose (hereinafter, a first cluster) is not (pre-)configured and/or defined, a UE may assume that the first cluster is also used as a cluster for an interference coordination purpose.

Here, the network may inform a UE of a purpose and/or a use of cluster configuration.

Here, the network may deliver (or transmit and/or configure) to a UE a cluster-specific transmission configuration and/or a cell-specific transmission configuration in a distinguished manner.

Here, the proposed method may be applied (differently) per (a UE's) altitude and/or per a reception strength of a (base station-to-UE communication (e.g., downlink)) reference signal.

In a mobile communication system according to an embodiment of the present disclosure, when it is assumed that a (terrestrial) network (or a base station) provides a service for an aerial UE (e.g., Unmanned aerial vehicle (UAV)) and/or a terrestrial UE (e.g., handheld device), a service for the aerial UE may cause a new type of UE-to-base station communication (e.g., uplink) interference and/or base station-to-UE communication (e.g., downlink) interference, unlike a conventional wireless environment in which only a service for a terrestrial UE is supported.

For example, a UE-to-base station signal (e.g., an uplink signal) transmitted by an aerial UE to a (terrestrial) base station (or a cell) may act as UE-to-base station communication (e.g., uplink) interference to another (terrestrial) base station (or cell)(s) other than a (terrestrial) base station (or a cell) serving the aerial UE (e.g., air-to-ground interference). For example, a UE-to-base station signal (e.g., an uplink signal) transmitted by an aerial UE to a (terrestrial) base station (or a cell) may cause UE-to-base station communication (e.g., uplink) interference to another (terrestrial) base station (or cell)(s) other than a (terrestrial) base station (or a cell) serving the aerial UE (e.g., air-to-ground interference). For example, a UE-to-base station signal (e.g., an uplink signal) transmitted by an aerial UE to a (terrestrial) base station (or a cell) may be UE-to-base station communication (e.g., uplink) interference to another (terrestrial) base station (or cell)(s) other than a (terrestrial) base station (or a cell) serving the aerial UE (e.g., air-to-ground interference).

For example, a base station-to-UE communication (e.g., downlink) signal transmitted by a (terrestrial) base station (or a cell) to an aerial UE and/or a terrestrial UE (for example, side lobes of a base station-to-UE communication (e.g., downlink) beam) may act as base station-to-UE communication (e.g., downlink) interference to another aerial UE other than a UE served by the (terrestrial) base station (or the cell) (e.g., ground-to-air interference). For example, a base station-to-UE communication (e.g., downlink) signal transmitted by a (terrestrial) base station (or a cell) to an aerial UE and/or a terrestrial UE (for example, side lobes of a base station-to-UE communication (e.g., downlink) beam) may cause base station-to-UE communication (e.g., downlink) interference to another aerial UE other than a UE served by the (terrestrial) base station (or the cell) (e.g., ground-to-air interference). For example, a base station-to-UE communication (e.g., downlink) signal transmitted by a (terrestrial) base station (or a cell) to an aerial UE and/or a terrestrial UE (for example, side lobes of a base station-to-UE communication (e.g., downlink) beam) may be base station-to-UE communication (e.g., downlink) interference to another aerial UE other than a UE served by the (terrestrial) base station (or the cell) (e.g., ground-to-air interference).

For example, a side lobe may refer to each radiation group when an energy distribution of a transmitted radio wave is divided into a plurality of directions. For example, a side lobe may refer to a phenomenon in which, when a signal is transmitted in a specific beam direction, a signal component is transmitted in a direction different from the specific beam direction (e.g., a perpendicular direction, an opposite direction, etc.) and/or the signal component.

Here, interference according to supporting a service for an aerial UE may affect a plurality of (terrestrial) base station(s) (or cell(s)) within a specific area. Accordingly, according to an embodiment of the present disclosure, a plurality of (terrestrial) base station(s) (or cell(s)) affected by interference according to the service for the aerial UE may be (pre-)configured and/or (pre-)defined as one cluster. And, for example, a network and/or a UE may apply (or perform) an interference coordination method (or operation) and/or an interference mitigation method (or operation) within the cluster. Here, the cluster may be (pre-)defined, and in this case, an aerial UE and the like may identify the cluster through a service discovery process.

Accordingly, in the present disclosure, when a network can (pre-)configure and/or (pre-)define a cluster composed of a plurality of cells for a UE, a method for (pre-)configuring and/or (pre-)defining, for the UE, a cluster(s) for one or more of the following purposes is proposed.
(1) a service discovery purpose
(2) a purpose for coordinating UE-to-base station communication (e.g., uplink) interference (or a purpose for coordinating air-to-ground interference)
(3) a purpose for coordinating base station-to-UE communication (e.g., downlink) interference (or a purpose for coordinating ground-to-air interference)

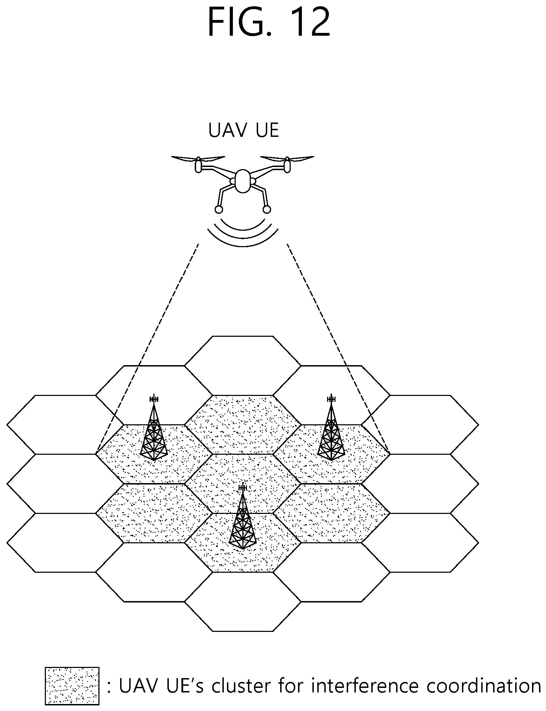

FIG. 12 shows a cluster configured/defined for a service for an aerial UE according to an embodiment of the present disclosure. The embodiment of FIG. 12 may be combined with various embodiments of the present disclosure.

Referring to FIG. 12, a UAV UE is shown, and a cluster composed of a plurality of cells (or base stations related to the cells) having a line of sight (LOS) secured with the UAV UE is shown. For example, the cluster may be related to an interference coordination operation according to various embodiments of the present disclosure.

For example, according to the above-described embodiment, there may be an advantage that interference according to an aerial UE service (a service for an aerial UE and/or a service related to an aerial UE) may be controlled within a cluster clearly agreed and/or defined among each other (e.g., among a network and/or a UE) by a network and/or a UE.

The above [Proposal #01] may be applied in combination with a method(s) of another proposal within a range in which operations of the disclosure do not conflict.

### [Proposal #02]

According to an embodiment of the present disclosure, when a network can (pre-)configure and/or (pre-)define a cluster composed of a plurality of cells for a UE, a method may be provided in which the UE performs a discovery/identification process for a cell and/or a cluster through one or more of the following methods.
(1) a method of first discovering/identifying a cell to receive a service. For example, thereafter, a UE may discover/identify a cluster related to the cell.
(2) a method of first discovering/identifying a cluster to receive a service. For example, thereafter, a UE may discover/identify a cell related to the cluster.

Here, the cluster may refer to a cluster for a service discovery purpose and/or a cluster for an interference coordination purpose.

Here, a discovery/identification process for the cell and/or the cluster may be applied differently according to a use purpose of the cluster. Alternatively, for example, a discovery/identification process for the cell and/or the cluster may be performed differently according to a use purpose of the cluster. For example, when a discovery/identification process for the cell and/or the cluster is for a service discovery purpose, cluster discovery/identification may be performed earlier than cell discovery/identification, and when a discovery/identification process for the cell and/or the cluster is for an interference control purpose, cell discovery/identification may be performed earlier than cluster discovery/identification.

Here, for example, a discovery/identification process for the cell and/or the cluster may be applied differently according to a UE type and/or a service type. Alternatively, for example, a discovery/identification process for the cell and/or the cluster may be performed differently according to a UE type and/or a service type. For example, when a subject performing the discovery/identification process for the cell and/or the cluster is a terrestrial UE, cell discovery/identification may be performed earlier than cluster discovery/identification, and when a subject performing the discovery/identification process for the cell and/or the cluster is an aerial UE, cluster discovery/identification may be performed earlier than cell discovery/identification.

Here, the network may transmit a signal for cell discovery and a signal for cluster discovery in a distinguished manner. For example, the network transmits a signal for cell discovery and a signal for cluster discovery in a distinguished manner, and a UE may perform cell discovery and/or cluster discovery by using the signal for cell discovery and the signal for cluster discovery.

Here, for example, the network may (pre-)configure and/or (pre-)define an initial and/or default cluster for a UE, and thereafter, the network may perform a configuration for updating the cluster information.

Here, the proposed method may be applied (differently) per (a UE's) altitude and/or per a reception strength of a (base station-to-UE communication (e.g., downlink)) reference signal.

In a mobile communication system according to an embodiment of the present disclosure, when it is assumed that a (terrestrial) network (or a base station) provides a service for an aerial UE (e.g., Unmanned aerial vehicle (UAV)) and/or a terrestrial UE (e.g., handheld device), the network may support a function such as three-dimensional mobility support and/or UE-to-base station communication (e.g., uplink)/base station-to-UE communication (e.g., downlink) interference coordination as part of a service for the aerial UE and/or the terrestrial UE, and may (pre-)define and/or (pre-)configure a cluster composed of a plurality of base station(s) (or cell(s)) as a unit for supporting the function(s).

For example, a network may (pre-)configure and/or (pre-)define a cluster composed of a plurality of cells for an aerial UE and/or a terrestrial UE, and it may be assumed that the aerial UE and/or the terrestrial UE receives a service in units of the cluster. Here, a service in units of the cluster may refer to that a service is provided from any cell and/or one or more cell(s) within the cluster, and a separate handover procedure may not be required when a serving cell is changed within the cluster.

Here, for example, providing a service in units of the cluster may be a scheme requiring high implementation complexity and/or computational load from a network perspective, and thus, the scheme may be supported only for a specific UE type and/or a specific service type. For example, a network may provide a service in units of a cluster for aerial UE(s), and may provide a service in units of a cell for terrestrial UE(s).

Here, for example, when a network can (pre-)configure and/or (pre-)define a cluster composed of a plurality of cells for a UE, a cell and/or cluster discovery/identification process may be different according to a UE type and/or a service type. For example, in a case of a terrestrial UE (expected to receive a service in units of a cell), the UE may first discover/identify a cell to receive a service (for example, to provide a service to the UE), and thereafter, may discover/identify a cluster related to the cell.

For example, in a case of an aerial UE (expected to receive a service in units of a cluster), the UE may first discover/identify a cluster to receive a service (for example, to provide a service to the UE), and thereafter, may discover/identify a cell related to the cluster. For example, a UE may discover/identify a serving cell within the cluster.

Accordingly, in the present disclosure, when a network can (pre-)configure and/or (pre-)define a cluster composed of a plurality of cells for a UE, a method is proposed in which the UE performs a discovery/identification process for a cell and/or a cluster through one or more of the following methods according to a UE type and/or a service type.
(1) a method of first discovering/identifying a cell to receive a service. For example, thereafter, a UE may discover/identify a cluster related to the cell.
(2) a method of first discovering/identifying a cluster to receive a service. For example, thereafter, a UE may discover/identify a cell related to the cluster.

According to the method of the above embodiment, when a network provides a service for an aerial UE and/or a terrestrial UE, there may be an advantage that hierarchical service units such as a service in units of a cluster and/or a service in units of a cell may be supported according to a UE type and/or a service type.

The above [Proposal #02] may be applied in combination with a method(s) of another proposal within a range in which operations of the disclosure do not conflict.

### [Proposal #03]

According to an embodiment of the present disclosure, when a network can (pre-)configure and/or (pre-)define a cluster composed of a plurality of cells for a UE, a method may be provided in which the network serves the UE through one or more of the following methods.
(1) a method of providing a service through a single cell within a cluster.
(2) a method of providing a service through a plurality of cells within a cluster. For example, within a cluster, a cell for a base station-to-UE communication (e.g., downlink) service and a cell for a UE-to-base station communication (e.g., uplink) service may be independently configured. Alternatively, for example, within a cluster, a serving cell may be changed according to a time resource, a frequency resource, and/or a spatial resource (for example, a spatial filter).

Here, the cluster may refer to a cluster for a service discovery purpose and/or a cluster for an interference coordination purpose.

Here, the network may (pre-)configure and/or (pre-)define, for a UE, whether a service is a single cell-based service or a multi-cell-based service.

Here, mobility for the UE may be managed within a cluster related to a cell providing a service. For example, when a serving cell for the UE is changed within the cluster, a handover procedure may not be required. For example, when a serving cell for the UE is changed within the cluster, a handover procedure may not be required.

Here, when the network and/or a UE operates in a fallback mode, a service may be supported through a (single) cell (pre-)defined and/or (pre-)configured within a cluster.

Here, the proposed method may be applied (differently) per (a UE's) altitude and/or per a reception strength of a (base station-to-UE communication (e.g., downlink)) reference signal.

In a mobile communication system according to an embodiment of the present disclosure, when it is assumed that a (terrestrial) network (or a base station) provides a service for an aerial UE (e.g., Unmanned aerial vehicle (UAV)) and/or a terrestrial UE (e.g., handheld device), the network may support a function such as three-dimensional mobility support and/or UE-to-base station communication (e.g., uplink)/base station-to-UE communication (e.g., downlink) interference coordination as part of a service for the aerial UE and/or the terrestrial UE, and a cluster composed of a plurality of base station(s) (or cell(s)) may be (pre-)defined and/or (pre-)configured as a unit for supporting the function(s).

For example, a network may (pre-)configure and/or (pre-)define a cluster composed of a plurality of cells for a UE, and it may be assumed that the UE receives a service in units of the cluster. Here, since a plurality of cell(s) exist within the cluster, a cell capable of serving the UE may be one or more.

Here, for example, when a network serves a UE in units of a cluster composed of a plurality of cells, (the network) may have a degree of freedom in selecting a cell to provide a service. For example, the network may independently configure, for the UE, a cell for a base station-to-UE communication (e.g., downlink) service and a cell for a UE-to-base station communication (e.g., uplink) service within the cluster.

Here, a cell for a base station-to-UE communication (e.g., downlink) service and a cell for a UE-to-base station communication (e.g., uplink) service may be selected from a perspective of mitigating base station-to-UE communication (e.g., downlink) interference and UE-to-base station communication (e.g., uplink) interference.

Alternatively, for example, a network may change a cell to provide a service to a UE within a cluster according to a time/frequency/spatial resource. For example, the network may change, according to time, a cell to receive UE-to-base station communication (e.g., uplink) of the UE, thereby preventing an influence of UE-to-base station communication (e.g., uplink) interference within the cluster from being concentrated in a specific region.

Here, a UE may adjust its transmission beam (or spatial filter) and/or reception beam (or spatial filter) according to a change of the serving cell.

According to the method of the above embodiment, there may be an advantage that an interference influence may be considered in selection and configuration of a serving cell for a UE that receives a service in units of a cluster, such as an aerial UE. Here, when a network and a UE temporarily operate in a fallback mode or the like, a service may be supported through a cell (pre-)defined and/or (pre-)configured within the cluster.

For example, when a UE determines that control information for configuring a serving cell within a cluster has not been fully received, a network and the UE may assume that a service is supported through a cell (pre-)defined and/or (pre-)configured within the cluster, and may perform data transmission and reception through the cell.

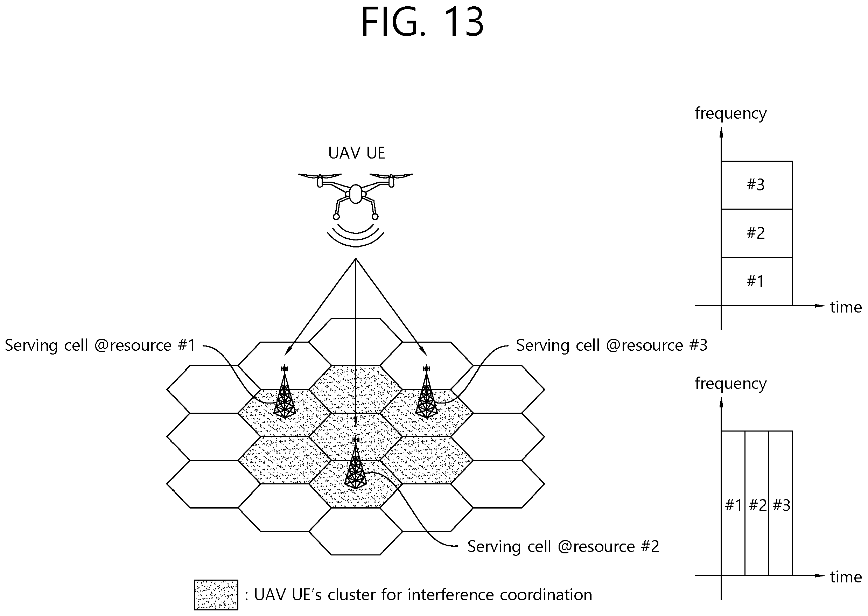

FIG. 13 shows a configuration for a serving cell within a cluster for an aerial UE according to an embodiment of the present disclosure. The embodiment of FIG. 13 may be combined with various embodiments of the present disclosure.

Referring to FIG. 13, a UAV UE is shown, and three serving cells capable of serving the UAV UE (the number of serving cells is only an example, and the number of a plurality of serving cells included in a cluster is not limited thereto) are shown. For example, within the same time domain resource, resources may be separated into first to third frequency resource regions, and each serving cell related to the corresponding frequency resource region may be changed to serve the UAV UE. Alternatively, for example, within the same frequency domain resource, resources may be separated into first to third time resource regions, and each serving cell related to the corresponding time resource region may be changed to serve the UAV UE.

The above [Proposal #03] may be applied in combination with a method(s) of another proposal within a range in which operations of the disclosure do not conflict.

### [Proposal #04]

According to an embodiment of the present disclosure, when a network can (pre-)configure and/or (pre-)define a cluster composed of a plurality of cells for a UE, a method may be provided in which the network transmits one or more of the following information through configuration information related to a UE-to-base station communication beam (e.g., an uplink beam) and/or a spatial filter of the UE.
(1) information for a location targeted by a UE-to-base station communication beam (e.g., an uplink beam) and/or a spatial filter
(2) information for a cell targeted by a UE-to-base station communication beam (e.g., an uplink beam) and/or a spatial filter
(3) information for a width limitation of a UE-to-base station communication beam (e.g., an uplink beam) and/or a spatial filter
(4) information for a center location and/or a radius of a cluster

Here, the cluster may refer to a cluster for a service discovery purpose and/or a cluster for an interference coordination purpose.

Here, the network may transmit configuration information related to a UE-to-base station communication beam (e.g., an uplink beam) and/or a spatial filter of a UE per (a UE's) altitude.

Here, when the network does not provide configuration information related to a UE-to-base station communication beam (e.g., an uplink beam) and/or a spatial filter of a UE, the UE may use a base station-to-UE communication (e.g., downlink) beam, a beam corresponding to a spatial filter, and/or a spatial filter as a UE-to-base station communication beam (e.g., an uplink beam) and/or a spatial filter.

Here, the proposed method may be applied (differently) per (a UE's) altitude and/or per a reception strength of a (base station-to-UE communication (e.g., downlink)) reference signal.

In a mobile communication system according to an embodiment of the present disclosure, when it is assumed that a (terrestrial) network (or a base station) provides a service for an aerial UE (e.g., Unmanned aerial vehicle (UAV)) and/or a terrestrial UE (e.g., handheld device), the network may support a function such as three-dimensional mobility support and/or UE-to-base station communication (e.g., uplink)/base station-to-UE communication (e.g., downlink) interference coordination as part of a service for the aerial UE and/or the terrestrial UE, and a cluster composed of a plurality of base station(s) (or cell(s)) may be (pre-)defined and/or (pre-)configured as a unit for supporting the function(s).

Here, when an aerial UE located at an edge of a cluster (pre-)configured and/or (pre-)defined by a network applies a UE-to-base station communication beam (e.g., an uplink beam) (or a spatial filter) in a downward direction of the UE, a large interference influence may be given to UE-to-base station communication (e.g., uplink) of cell(s) located outside the cluster (or interference may be caused). Accordingly, in the present disclosure, a method is proposed in which a network provides configuration information to a UE for configuring a UE-to-base station communication beam (e.g., an uplink beam) (or a spatial filter) when performing UE-to-base station transmission (e.g., uplink transmission).

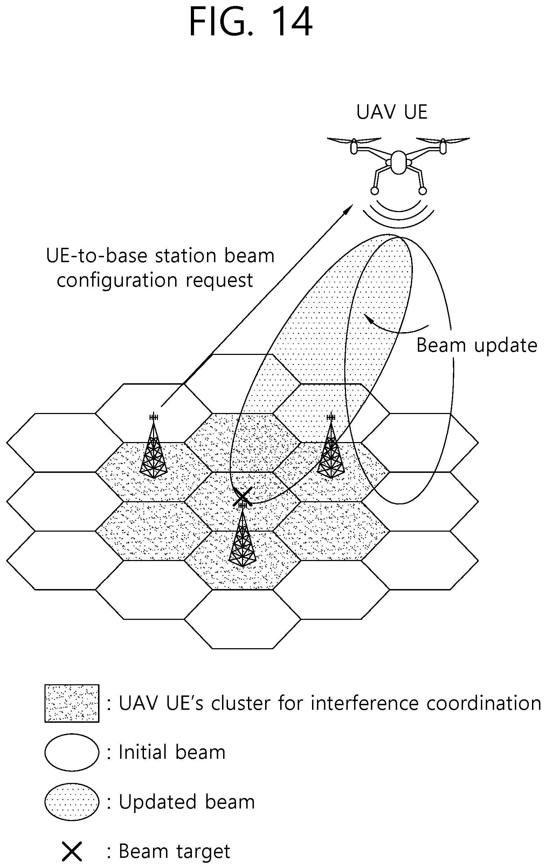

FIG. 14 shows an operation for configuring a UE-to-base station communication beam (e.g., an uplink beam) (or a spatial filter) of an aerial UE according to an embodiment of the present disclosure. The embodiment of FIG. 14 may be combined with various embodiments of the present disclosure.

Referring to FIG. 14, a network may provide, to a UE, information such as information for a location (or a cell) targeted by a UE-to-base station communication beam (e.g., an uplink beam) (or a spatial filter), a width limitation of a UE-to-base station communication beam (e.g., an uplink beam) (or a spatial filter), a center location of a cluster, and/or a radius of a cluster. Here, an aerial UE may adjust a UE-to-base station communication beam (e.g., an uplink beam) (or a spatial filter) based on configuration information for a UE-to-base station communication beam (e.g., an uplink beam) (or a spatial filter) provided by the network. For example, the network may configure the aerial UE to be directed toward a center of the cluster, and accordingly, the aerial UE performs beam updating and UE-to-base station communication (e.g., uplink) interference applied to (or caused to) outside the cluster may be mitigated.

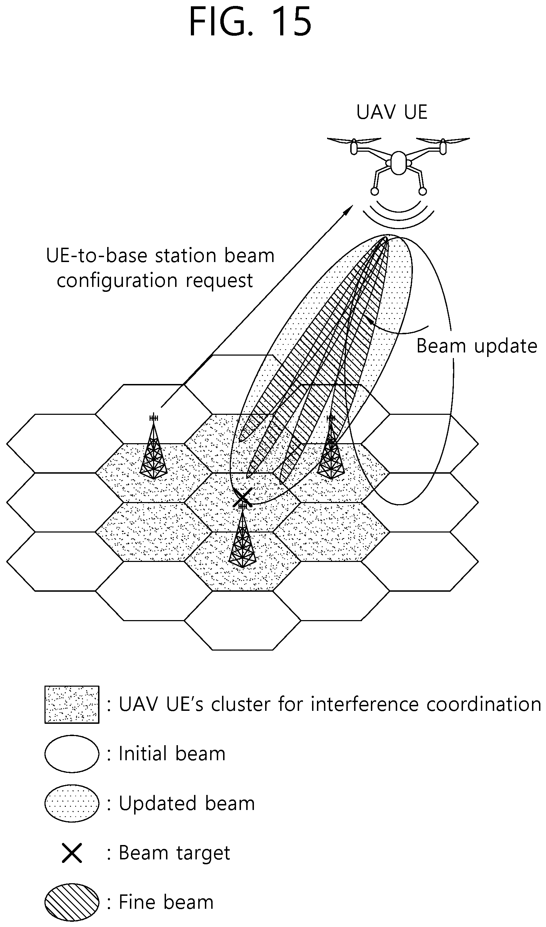

FIG. 15 shows an operation for configuring a UE-to-base station communication beam (e.g., an uplink beam) (or a spatial filter) of an aerial UE according to an embodiment of the present disclosure. The embodiment of FIG. 15 may be combined with various embodiments of the present disclosure.

Referring to FIG. 15, for example, a network may configure (or align) a coarse beam by configuring, for an aerial UE, information for a location and/or a cell targeted by a UE-to-base station communication beam (e.g., an uplink beam) (or a spatial filter), and thereafter, may search for a fine beam by triggering transmission of a UE-to-base station communication (e.g., uplink) reference signal to which beam sweeping is applied.

Here, the network may indicate, to a UE, to apply a specific fine beam after the fine beam search process. For example, a UE may transmit a plurality of sounding reference signal resources (or a plurality of sounding reference signals) to which different beams (or spatial filters) are applied, and a base station may transmit, to the UE, information for a sounding reference signal resource corresponding to a preferred beam (or spatial filter) among them.

The above [Proposal #04] may be applied in combination with a method(s) of another proposal within a range in which operations of the disclosure do not conflict.

### [Proposal #05]

According to an embodiment of the present disclosure, when a network can (pre-)configure and/or (pre-)define a cluster composed of a plurality of cells for a UE, the network may configure, for the UE, whether to include cluster identification information, cell identification information, and/or UE-to-base station communication beam (e.g., uplink beam) (or spatial filter) identification information in UE-to-base station transmission (e.g., uplink transmission) (or a measurement resource), and the UE may transmit, according to the configuration, by including the cluster identification information, the cell identification information, and/or the UE-to-base station communication beam (e.g., uplink beam) (or spatial filter) identification information in the UE-to-base station transmission (e.g., uplink transmission) (or the measurement resource).

Here, for example, the cluster may refer to a cluster for a service discovery purpose and/or a cluster for an interference coordination purpose.

Here, for example, the UE-to-base station communication (e.g., uplink) resource (or a measurement resource) (or a transmission related to UE-to-base station communication (e.g., uplink)) may include UE identification information.

Here, the network may measure an interference influence from a specific cluster, a specific cell, and/or a specific UE-to-base station communication beam (e.g., an uplink beam) (or a spatial filter) by using cluster identification information, cell identification information, and/or UE-to-base station communication beam (e.g., an uplink beam) (or a spatial filter) identification information in UE-to-base station transmission (e.g., uplink transmission) (or a measurement resource) of a UE.

Here, for example, the cluster identification information, the cell identification information, and/or UE-to-base station communication beam (e.g., an uplink beam) (or a spatial filter) identification information may be transmitted in a form of a control signal, and may be transmitted in a form that can be decoded by any cell and/or a UE.

Here, the proposed method may be applied (differently) per (a UE's) altitude and/or per a reception strength of a (base station-to-UE communication (e.g., downlink)) reference signal.

In a mobile communication system according to an embodiment of the present disclosure, when it is assumed that a (terrestrial) network (or a base station) provides a service for an aerial UE (e.g., Unmanned aerial vehicle (UAV)) and/or a terrestrial UE (e.g., handheld device), the network may support a function such as three-dimensional mobility support and/or UE-to-base station communication (e.g., uplink)/base station-to-UE communication (e.g., downlink) interference coordination as part of a service for the aerial UE and/or the terrestrial UE, and a cluster composed of a plurality of base station(s) (or cell(s)) may be (pre-)defined and/or (pre-)configured as a unit for supporting the function(s).

Here, for example, a cluster (pre-)defined and/or (pre-)configured by the network for a UE may, in some cases, not match a range in which the UE causes interference. For example, an influence of UE-to-base station communication (e.g., uplink) interference (e.g., air-to-ground interference) of an aerial UE on a (terrestrial) network may be significantly perceived outside the cluster configured by the network. Here, when it is assumed that the network may apply (or perform) an interference coordination method (or operation) within the cluster, the network may need to restrict the aerial UE to cause an interference influence only within the cluster.

For example, a network may select a beam (or a spatial filter) among UE-to-base station communication beams (e.g., uplink beams) (or spatial filters) of an aerial UE, which has a small interference influence toward outside a cluster. Here, in order to support beam (or spatial filter) control of the aerial UE considering interference inside and outside the cluster, a (terrestrial) network may need to be able to measure an interference influence from the aerial UE.

Here, in order to measure an interference influence at a time of UE-to-base station transmission (e.g., uplink transmission) of the aerial UE, a cluster, a cell, and/or a UE-to-base station communication beam (e.g., an uplink beam) (or a spatial filter) to which UE-to-base station communication (e.g., uplink) data causing interference belongs may need to be identifiable.

Accordingly, in the present disclosure, when a network can (pre-)configure and/or (pre-)define a cluster composed of a plurality of cells for a UE, a method is proposed in which the network configures, for the UE, whether to include cluster identification information, cell identification information, and/or UE-to-base station communication beam (e.g., an uplink beam) (or a spatial filter) identification information in UE-to-base station transmission (e.g., uplink transmission), and the UE transmits, according to the configuration, by including the cluster identification information, the cell identification information, and/or the UE-to-base station communication beam (e.g., an uplink beam) (or a spatial filter) identification information in the UE-to-base station transmission (e.g., uplink transmission).

Through the proposed method of the present disclosure, when a UE-to-base station communication (e.g., uplink) resource of an aerial UE causes interference, a terrestrial network may identify from which (or based on which) cluster, cell, and/or UE-to-base station communication beam (e.g., an uplink beam) the UE-to-base station communication (e.g., uplink) resource is transmitted, and may request interference control to the corresponding cluster and/or cell. For example, when the indirect control request is received, the network may re-adjust a UE-to-base station communication beam (e.g., an uplink beam) (or a spatial filter) of a UE causing interference.

The above [Proposal #05] may be applied in combination with a method(s) of another proposal within a range in which operations of the disclosure do not conflict.

### [Proposal #06]

According to an embodiment of the present disclosure, when a network can (pre-)configure and/or (pre-)define a cluster composed of a plurality of cells for a UE, a method may be provided in which the network configures, for the UE, with respect to a specific cluster (a first cluster), A. a resource region (a first resource region) to which a UE-to-base station communication (e.g., uplink) and/or base station-to-UE communication (e.g., downlink) interference coordination method (or operation) is applied (or performed) (within the first cluster), and/or B. a resource region (a second resource region) to which a UE-to-base station communication (e.g., uplink) and/or base station-to-UE communication (e.g., downlink) interference coordination method (or operation) is not applied (or performed) (within the first cluster).

Here, for example, the first cluster may refer to a cluster in which a UE receives a service and/or a cluster for an interference coordination purpose.

Here, for example, UE-to-base station communication (e.g., uplink) interference (or air-to-ground interference) may refer to an interference influence of UE-to-base station communication (e.g., uplink) of an aerial UE on UE-to-base station communication (e.g., uplink) of a terrestrial UE and/or (another) aerial UE.

Here, the base station-to-UE communication (e.g., downlink) interference (or ground-to-air interference) may refer to an interference influence of base station-to-UE communication (e.g., downlink) of a terrestrial UE and/or an aerial UE on base station-to-UE communication (e.g., downlink) of (another) aerial UE.

Here, whether to use the first resource region and/or the second resource region may be differently configured and/or defined according to a UE type and/or a service type. For example, an aerial UE may use only the first resource region, and a terrestrial UE may use the first resource region and/or the second resource region. For example, the second resource region may be used as a resource region dedicated to a terrestrial UE. For example, an aerial UE may be configured to use only the first resource region, and a terrestrial UE may be configured to use the first resource region and/or the second resource region. For example, the second resource region may be configured to be used as a resource region dedicated to a terrestrial UE.

Here, configuration of the first resource region and/or the second resource region may be independently configured for UE-to-base station communication (e.g., uplink) and base station-to-UE communication (e.g., downlink), respectively.

Here, the proposed method may be applied (differently) per (a UE's) altitude and/or per a reception strength of a (base station-to-UE communication (e.g., downlink)) reference signal.

In a mobile communication system according to an embodiment of the present disclosure, when it is assumed that a (terrestrial) network (or a base station) provides a service for an aerial UE (e.g., Unmanned aerial vehicle (UAV)) and/or a terrestrial UE (e.g., handheld device), the network may support a function such as three-dimensional mobility support and/or UE-to-base station communication (e.g., uplink)/base station-to-UE communication (e.g., downlink) interference coordination as part of a service for the aerial UE and/or the terrestrial UE, and a cluster composed of a plurality of base station(s) (or cell(s)) may be (pre-)defined and/or (pre-)configured as a unit for supporting the function(s).

Here, a network may apply (or perform) an interference coordination method (or operation) for UE-to-base station communication (e.g., uplink) and/or base station-to-UE communication (e.g., downlink) within a cluster. Here, the network may manage, in a distinguished manner, a resource region (a first resource region) to which the interference coordination method (or operation) is applied (or performed) within the cluster and a resource region (a second resource region) to which the interference coordination method (or operation) is not applied (or performed).

For example, a network may cause cell(s), aerial UE(s), and/or terrestrial UE(s) to perform sensing for interference as part of an interference coordination method (or operation) in the first resource region, and may perform resource allocation and/or scheduling such that interference is coordinated based on a sensing result.

On the other hand, for example, a network may not apply (or perform) an interference coordination method (or operation) in the second resource region, and may use the second resource region as a resource region dedicated to an aerial UE or a terrestrial UE. For example, when the second resource region is used as a resource dedicated to a terrestrial UE, an interference coordination method (or operation) for air-to-ground interference and/or ground-to-air (e.g., Ground-to-Air) interference may not be applied (or performed), but a conventional interference coordination method (or operation) among terrestrial cell(s) may still be applied (or performed).

In other words, the interference coordination method (or operation) within the cluster according to the proposal of the present disclosure may refer to a method (or operation) for coordinating interference caused by an aerial UE service. According to the proposed method of the present disclosure, a terrestrial network may support an aerial UE service and/or a terrestrial UE service simultaneously, limited to a specific resource region, while still ensuring a service quality for a terrestrial UE at or above a certain level. Alternatively, for example, a terrestrial network may configure a plurality of second resource regions, and may operate them by distinguishing them into an aerial UE-dedicated (second) resource region and a terrestrial UE-dedicated (second) resource region.

The above [Proposal #06] may be applied in combination with a method(s) of another proposal within a range in which operations of the disclosure do not conflict.

### [Proposal #07]

According to an embodiment of the present disclosure, when a network can (pre-)configure and/or (pre-)define a cluster composed of a plurality of cells for a UE, a method may be provided for supporting a sensing-based interference coordination method (or operation) including one or more of the following steps as a UE-to-base station communication (e.g., uplink) interference coordination method (or operation) (within a cluster).
(1) a step in which a network transmits resource reservation information related to UE-to-base station communication (e.g., uplink) through base station-to-UE communication (e.g., downlink). For example, a first base station (within a cluster) may transmit, to a first UE (to be served) (within the cluster), resource reservation information related to first UE-to-base station communication (e.g., uplink).
(2) a step in which a UE(s) transmits resource reservation information related to UE-to-base station communication (e.g., uplink) through UE-to-base station communication (e.g., uplink). For example, a first UE (within a cluster) may transmit, at a time of UE-to-base station transmission (e.g., uplink transmission), by including resource reservation information related to first UE-to-base station communication (e.g., uplink) (transmitted by a first base station).
(3) a step in which a network and/or a UE(s) senses resource reservation information related to UE-to-base station communication (e.g., uplink). For example, a second base station (within a cluster) may sense resource reservation information related to first UE-to-base station communication (e.g., uplink) transmitted by a first UE (not to be served) (within the cluster). For example, a second UE (within a cluster) may sense resource reservation information related to first UE-to-base station communication (e.g., uplink) transmitted by a first base station, and may report a sensing result (or assistance information according to the sensing result) to a second base station.
(4) a step in which a network uses a sensing result for resource reservation information related to UE-to-base station communication (e.g., uplink). For example, a second base station (within a cluster) may use a sensing result of the second base station for resource reservation information related to first UE-to-base station communication (e.g., uplink) and/or a sensing result of a second UE (or assistance information according to the sensing result) for scheduling UE-to-base station communication (e.g., uplink) of a second UE (to be served).

Here, for example, the cluster may refer to a cluster for a service discovery purpose and/or a cluster for an interference coordination purpose.

Here, for example, UE-to-base station communication (e.g., uplink) interference (or air-to-ground interference) may refer to an interference influence of UE-to-base station communication (e.g., uplink) of an aerial UE on UE-to-base station communication (e.g., uplink) of a terrestrial UE and/or (another) aerial UE.

Here, for example, some step(s) among the step(s) may be omitted.

Here, for example, resource reservation information related to UE-to-base station communication (e.g., uplink) may include cluster identification information.

Here, resource reservation information related to UE-to-base station communication (e.g., uplink) may be transmitted in a form of a control signal, and may be transmitted such that any base station and/or a UE (within a cluster) can decode it.

Here, for example, a base station and/or a cell within a specific cluster (hereinafter, a first cluster) may perform sensing for resource reservation information related to UE-to-base station communication (e.g., uplink) within the first cluster.

Here, the sensing process may include detection of resource reservation information and/or measurement of an expected interference strength due to the corresponding link.

Here, the method may be applied to both dynamic grant (DG)-based scheduling and/or configured grant (CG)-based scheduling.

Here, the proposed method may be applied (differently) per (a UE's) altitude and/or per a reception strength of a (base station-to-UE communication (e.g., downlink)) reference signal.

In a mobile communication system according to an embodiment of the present disclosure, when it is assumed that a (terrestrial) network (or a base station) provides a service for an aerial UE (e.g., Unmanned aerial vehicle (UAV)) and/or a terrestrial UE (e.g., handheld device), the network may support a function such as three-dimensional mobility support and/or UE-to-base station communication (e.g., uplink)/base station-to-UE communication (e.g., downlink) interference coordination as part of a service for the aerial UE and/or the terrestrial UE, and a cluster composed of a plurality of base station(s) (or cell(s)) may be (pre-)defined and/or (pre-)configured as a unit for supporting the function(s).

Here, a network may apply (or perform) an interference coordination method (or operation) for UE-to-base station communication (e.g., uplink) and/or base station-to-UE communication (e.g., downlink) within a cluster.

For example, a network may apply (or perform) a sensing-based interference coordination method (or operation) in order to reduce UE-to-base station communication (e.g., uplink) interference within a cluster. Here, the sensing-based interference coordination method (or operation) may be a method (or operation) in which base station(s) (or cell(s)) within the cluster share resource reservation information related to UE-to-base station communication (e.g., uplink), and select a resource having a low interference level by performing a sensing operation for resource reservation information related to UE-to-base station communication (e.g., uplink) of other base station(s) (or cell(s)) and/or an interference strength from the corresponding link.

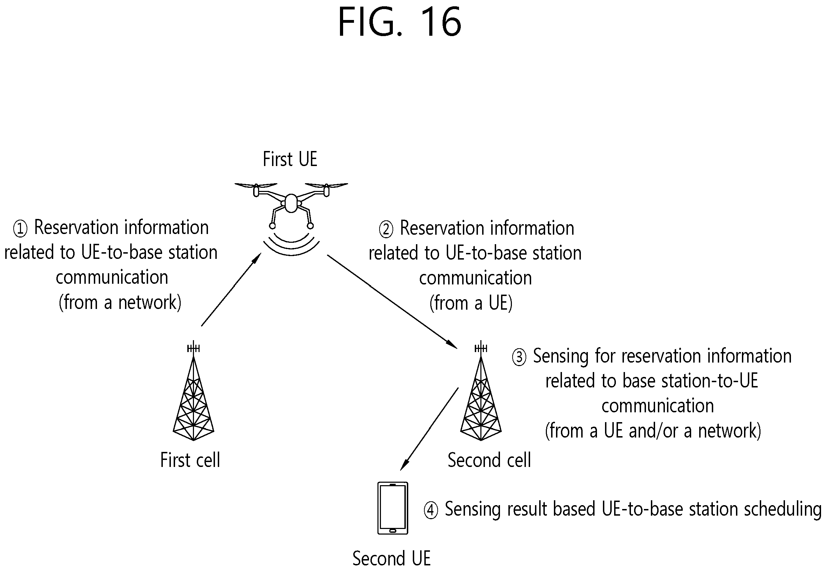

FIG. 16 may show a sensing-based UE-to-base station communication (e.g., uplink) interference coordination method (or operation) according to an embodiment of the present disclosure. The embodiment of FIG. 16 may be combined with various embodiments of the present disclosure.

Referring to FIG. 16, transmission of resource reservation information related to UE-to-base station communication (e.g., uplink) may be performed by a base station and/or a UE that provides the resource reservation information related to the UE-to-base station communication (e.g., uplink) within a cluster. For example, a first base station (within a cluster) may transmit, to a first UE (to be served) (within the cluster), resource reservation information related to first UE-to-base station communication (e.g., uplink). For example, a first UE (within a cluster) may transmit, at a time of UE-to-base station transmission (e.g., uplink transmission), by including resource reservation information related to first UE-to-base station communication (e.g., uplink) (transmitted by a first base station).

Here, for example, sensing for resource reservation information related to UE-to-base station communication (e.g., uplink) may be performed by a base station and/or a UE that uses the resource reservation information related to the UE-to-base station communication (e.g., uplink) within a cluster. For example, a second base station (within a cluster) may sense resource reservation information related to first UE-to-base station communication (e.g., uplink) transmitted by a first UE (not to be served) (within the cluster). For example, a second UE (within a cluster) may sense resource reservation information related to first UE-to-base station communication (e.g., uplink) transmitted by a first base station, and may report a sensing result (or assistance information according to the sensing result) to a second base station.

Here, a sensing result for resource reservation information related to UE-to-base station communication (e.g., uplink) may be used for UE-to-base station communication (e.g., uplink) scheduling of a base station. For example, a second base station (within a cluster) may use a sensing result of the second base station for resource reservation information related to first UE-to-base station communication (e.g., uplink) and/or a sensing result of a second UE (or assistance information according to the sensing result) for UE-to-base station communication (e.g., uplink) scheduling of a second UE (to be served).

According to the proposed method of the present disclosure, there may be an advantage that, when resource reservation information related to UE-to-base station communication (e.g., uplink) among each other is shared and a sensing result for the information is used for scheduling, interference during an aerial UE service may be coordinated.

The above [Proposal #07] may be applied in combination with a method(s) of another proposal within a range in which operations of the disclosure do not conflict.

### [Proposal #08]

According to an embodiment of the present disclosure, when a network can (pre-)configure and/or (pre-)define a cluster composed of a plurality of cells for a UE, a method may be provided for supporting a sensing-based interference coordination method (or operation) including one or more of the following steps as a base station-to-UE communication (e.g., downlink) interference coordination method (or operation) (within a cluster).
(1) a step in which a network transmits resource reservation information related to base station-to-UE communication (e.g., downlink) through base station-to-UE communication (e.g., downlink). For example, a first base station (within a cluster) may transmit, to a first UE (to be served) (within the cluster), resource reservation information related to first base station-to-UE communication (e.g., downlink).
(2) a step in which a UE(s) transmits resource reservation information related to base station-to-UE communication (e.g., downlink) through UE-to-base station communication (e.g., uplink). For example, a first UE (within a cluster) may transmit, at a time of UE-to-base station transmission (e.g., uplink transmission), by including resource reservation information related to first base station-to-UE communication (e.g., downlink) (transmitted by a first base station).
(3) a step in which a network and/or a UE(s) senses resource reservation information related to UE-to-base station communication (e.g., uplink). For example, a second base station (within a cluster) may sense resource reservation information related to first base station-to-UE communication (e.g., downlink) transmitted by a first UE (not to be served) (within the cluster). For example, a second UE (within a cluster) may sense resource reservation information related to first base station-to-UE communication (e.g., downlink) transmitted by a first base station, and may report a sensing result (or assistance information according to the sensing result) to a second base station.
(4) a step in which a network uses a sensing result for resource reservation information related to base station-to-UE communication (e.g., downlink). For example, a second base station (within a cluster) may use a sensing result of the second base station for resource reservation information related to first base station-to-UE communication (e.g., downlink) and/or a sensing result of a second UE (or assistance information according to the sensing result) for base station-to-UE communication (e.g., downlink) scheduling of a second UE (to be served).

Here, for example, the cluster may refer to a cluster for a service discovery purpose and/or a cluster for an interference coordination purpose.

Here, for example, the base station-to-UE communication (e.g., downlink) interference (or ground-to-air interference) may refer to an interference influence of base station-to-UE communication (e.g., downlink) of a terrestrial UE and/or an aerial UE on base station-to-UE communication (e.g., downlink) of (another) aerial UE.

Here, for example, some step(s) among the above step(s) may be omitted.

Here, for example, resource reservation information related to base station-to-UE communication (e.g., downlink) may include cluster identification information.

Here, for example, resource reservation information related to base station-to-UE communication (e.g., downlink) may be transmitted in a form of a control signal, and may be transmitted such that an arbitrary base station and/or UE (within a cluster) can decode it.

Here, for example, a base station and/or a cell within a specific cluster (hereinafter, a first cluster) may perform sensing for resource reservation information related to base station-to-UE communication (e.g., downlink) within the first cluster.

Here, for example, the sensing process may include detection for the resource reservation information and/or measurement of an estimated interference strength caused by the corresponding link.

Here, for example, the method may be applied to both dynamic grant (DG)-based scheduling and/or configured grant (CG)-based scheduling.

Here, for example, the proposed method may be applied (differently) per (a UE's) altitude and/or per a reception strength of a (base station-to-UE communication (e.g., downlink)) reference signal.

In a mobile communication system according to an embodiment of the present disclosure, when it is assumed that a (terrestrial) network (or a base station) provides a service for an aerial UE (e.g., Unmanned aerial vehicle (UAV)) and/or a terrestrial UE (e.g., handheld device), the network may support a function such as three-dimensional mobility support and/or UE-to-base station communication (e.g., uplink)/base station-to-UE communication (e.g., downlink) interference coordination as part of a service for the aerial UE and/or the terrestrial UE, and a cluster composed of a plurality of base station(s) (or cell(s)) may be (pre-)defined and/or (pre-)configured as a unit for supporting the function(s).

Here, a network may apply (or perform) an interference coordination method (or operation) for UE-to-base station communication (e.g., uplink) and/or base station-to-UE communication (e.g., downlink) within a cluster. For example, the network may apply (or perform) a sensing-based interference coordination method (or operation) in order to reduce base station-to-UE communication (e.g., downlink) interference within the cluster.

Here, the sensing-based interference coordination method (or operation) may be a method (or operation) in which base station(s) (or cell(s)) within the cluster share resource reservation information related to base station-to-UE communication (e.g., downlink), and select a resource having a low interference level by performing a sensing operation for resource reservation information related to base station-to-UE communication (e.g., downlink) of other base station(s) (or cell(s)) and/or an interference strength from the corresponding link. Here, for example, transmission of resource reservation information related to base station-to-UE communication (e.g., downlink) may be performed by a base station and/or a UE that is to provide the resource reservation information related to the base station-to-UE communication (e.g., downlink) within a cluster.

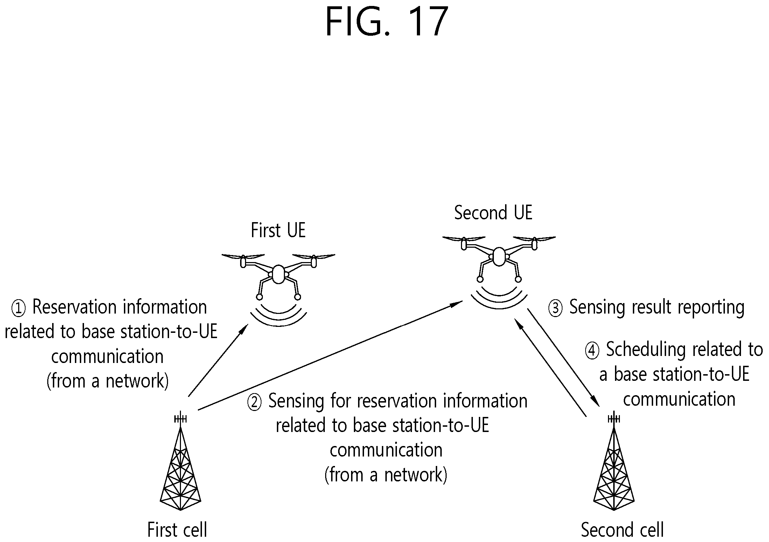

FIG. 17 shows a sensing-based base station-to-UE communication (e.g., downlink) interference coordination method (or operation) according to an embodiment of the present disclosure. The embodiment of FIG. 17 may be combined with various embodiments of the present disclosure.

Referring to FIG. 17, a first base station (within a cluster) may transmit, to a first UE (to be served) (within the cluster), resource reservation information related to first base station-to-UE communication (e.g., downlink).

For example, a first UE (within a cluster) may transmit, at a time of UE-to-base station transmission (e.g., uplink transmission), by including resource reservation information related to first base station-to-UE communication (e.g., downlink) (transmitted by a first base station).

Here, for example, sensing for resource reservation information related to base station-to-UE communication (e.g., downlink) may be performed by a base station and/or a UE that is to use the resource reservation information related to the base station-to-UE communication (e.g., downlink) within a cluster.

For example, a second base station (within a cluster) may sense resource reservation information related to first base station-to-UE communication (e.g., downlink) transmitted by a first UE (not to be served) (within the cluster).

For example, a second UE (within a cluster) may sense resource reservation information related to first base station-to-UE communication (e.g., downlink) transmitted by a first base station, and may report a sensing result (or assistance information according to the sensing result) to a second base station. Here, the sensing result for resource reservation information related to the base station-to-UE communication (e.g., downlink) may be used for base station-to-UE communication (e.g., downlink) scheduling of a base station.

For example, a second base station (within a cluster) may use a sensing result of the second base station for resource reservation information related to first base station-to-UE communication (e.g., downlink) and/or a sensing result of a second UE (or assistance information according to the sensing result) for base station-to-UE communication (e.g., downlink) scheduling of a second UE (to be served).

According to the proposed method of the present disclosure, there may be an advantage that, when resource reservation information related to base station-to-UE communication (e.g., downlink) among each other is shared and a sensing result for the information is used for scheduling, interference during an aerial UE service may be coordinated.

The above [Proposal #08] may be applied in combination with a method(s) of another proposal within a range in which operations of the disclosure do not conflict.

### [Proposal #09]

According to an embodiment of the present disclosure, a network (pre-)configures and/or (pre-)defines, for a UE, whether to transmit control information for interference coordination (or a control channel), and when transmission of the control information for interference coordination (or the control channel) is configured and/or defined, the UE transmits the control information for interference coordination (or performs transmission of the control channel) through UE-to-base station communication (e.g., uplink), and the control information for interference coordination (or the control channel) may include at least one or more of the following pieces of information.
(1) resource reservation information related to UE-to-base station communication (e.g., uplink)
(2) resource reservation information related to base station-to-UE communication (e.g., downlink)
(3) control information for demodulation of UE-to-base station communication (e.g., uplink) data

Here, for example, the control information for interference coordination (or the control channel) may follow a power control scheme independent of a UE-to-base station communication (e.g., uplink) data channel.

Here, for example, the control information for interference coordination (or the control channel) may be transmitted using time/frequency/code/spatial resources distinguished from a UE-to-base station communication (e.g., uplink) data channel.

Here, for example, the control information for interference coordination may be transmitted in a form that node(s) (pre-)configured and/or (pre-)defined between a network and a UE can decode.

Here, for example, the proposed method may be applied (differently) per (a UE's) altitude and/or per a reception strength of a (base station-to-UE communication (e.g., downlink)) reference signal.

In a mobile communication system according to an embodiment of the present disclosure, when it is assumed that a (terrestrial) network (or a base station) provides a service for an aerial UE (e.g., Unmanned aerial vehicle (UAV)) and/or a terrestrial UE (e.g., handheld device), UE-to-base station transmission (e.g., uplink transmission) of an aerial UE may act as interference to UE-to-base station transmission (e.g., uplink transmission) of a terrestrial UE.

Here, a UE-to-base station communication (e.g., uplink) channel of an aerial UE may be a link of sight or line of sight (LOS) channel, and a reception strength thereof may be relatively greater than that of UE-to-base station transmission (e.g., uplink transmission) of a terrestrial UE. Here, a base station (or a cell) (hereinafter, a first cell) that intends to receive UE-to-base station transmission (e.g., uplink transmission) of the terrestrial UE may apply (or perform), as one process of a non-orthogonal multiple access (NOMA) scheme, a successive interference cancellation method (or operation).

For example, the first cell may first perform demodulation of UE-to-base station communication (e.g., uplink) data of an aerial UE acting as interference, and then perform demodulation of UE-to-base station communication (e.g., uplink) data of a terrestrial UE after removing the UE-to-base station communication (e.g., uplink) data of the aerial UE from an entire received signal. Here, the first cell may need to know scheduling information for demodulation of UE-to-base station communication (e.g., uplink) data of the aerial UE, which is an interference signal.

Accordingly, in the present disclosure, as a method is proposed in which, for supporting demodulation of interference data, a network (pre-)configures and/or (pre-)defines, for a UE, whether to transmit control information for interference coordination (or a control channel), and when transmission of the control information for interference coordination (or the control channel) is configured and/or defined, the UE transmits the control information for interference coordination (or performs transmission of the control channel) through UE-to-base station communication (e.g., uplink), and the control information for interference coordination (or the control channel) includes at least one or more of the following pieces of information.
(1) resource reservation information related to UE-to-base station communication (e.g., uplink)
(2) resource reservation information related to base station-to-UE communication (e.g., downlink)
(3) control information for demodulation of UE-to-base station communication (e.g., uplink) data

According to the proposed method of the present disclosure, there may be an advantage in that a (terrestrial) base station (or a cell) that intends to receive UE-to-base station transmission (e.g., uplink transmission) for a terrestrial UE may, based on interference coordination control information (or a control channel) shared through UE-to-base station communication (e.g., uplink), rather treat UE-to-base station transmission (e.g., uplink transmission) of an aerial UE acting as strong interference as a demodulation target, and a successive interference cancellation method (or operation) can be applied (or performed).

The above [Proposal #09] may be applied in combination with a method(s) of another proposal within a range in which operations of the disclosure do not conflict.

### [Proposal #10]

According to an embodiment of the present disclosure, when a network configures transmission (of UE-to-base station communication (e.g., uplink) and/or base station-to-UE communication (e.g., downlink)) of an aerial UE and/or a terrestrial UE, a method may be provided in which a resource region of a reference signal (for data demodulation) for the aerial UE (for UE-to-base station communication (e.g., uplink) and/or base station-to-UE communication (e.g., downlink)) (hereinafter, a first reference signal resource region) and a resource region of a reference signal (for data demodulation) for the terrestrial UE (for UE-to-base station communication (e.g., uplink) and/or base station-to-UE communication (e.g., downlink)) (hereinafter, a second reference signal resource region) are (pre-)configured and/or (pre-)defined as independent and/or orthogonal resource regions.

Here, for example, the first reference signal resource region and the second reference signal resource region may be orthogonal or distinguished in terms of time/frequency/spatial resources.

Here, for example, the proposed method may be applied (differently) per (a UE's) altitude and/or per a reception strength of a (base station-to-UE communication (e.g., downlink)) reference signal.

In a mobile communication system according to an embodiment of the present disclosure, when it is assumed that a (terrestrial) network (or a base station) provides a service for an aerial UE (e.g., unmanned aerial vehicle (UAV)) and/or a terrestrial UE (e.g., handheld device), UE-to-base station transmission (e.g., uplink transmission) of an aerial UE may act as interference to UE-to-base station transmission (e.g., uplink transmission) of a terrestrial UE.

Here, a UE-to-base station communication (e.g., uplink) channel of an aerial UE may be a link of sight or line of sight (LOS) channel, and transmission over the channel may have a reception strength relatively greater than that of UE-to-base station transmission (e.g., uplink transmission) of a terrestrial UE. Here, a base station (or a cell) (hereinafter, a first cell) that intends to receive UE-to-base station transmission (e.g., uplink transmission) of the terrestrial UE may apply (or perform), as one process of a non-orthogonal multiple access (NOMA) scheme, a successive interference cancellation method (or operation).

For example, the first cell may first perform demodulation of UE-to-base station communication (e.g., uplink) data of an aerial UE acting as interference, and then perform demodulation of UE-to-base station communication (e.g., uplink) data of a terrestrial UE after removing the UE-to-base station communication (e.g., uplink) data of the aerial UE from an entire received signal.

Here, in order to apply (or perform) a scheme (or operation) such as NOMA, the base station may need to be able to identify a reception power ratio between a target signal and an interference signal. Here, for example, the reception power ratio may be measured through a UE-to-base station communication (e.g., uplink) reference signal (for example, a reference signal for demodulation of UE-to-base station communication (e.g., uplink) data), and thus reference signals for the target signal and the interference signal may need to be configured as orthogonal resources (or it may be preferable that they are configured as orthogonal resources).

Accordingly, in the present disclosure, when a network configures transmission (of UE-to-base station communication (e.g., uplink) and/or base station-to-UE communication (e.g., downlink)) of an aerial UE and/or a terrestrial UE, a method is proposed in which a resource region of a reference signal for data demodulation for the aerial UE (for UE-to-base station communication (e.g., uplink) and/or base station-to-UE communication (e.g., downlink)) (hereinafter, a first reference signal resource region) and a resource region of a reference signal for data demodulation for the terrestrial UE (for UE-to-base station communication (e.g., uplink) and/or base station-to-UE communication (e.g., downlink)) (hereinafter, a second reference signal resource region) are (pre-)configured and/or (pre-)defined as independent and/or orthogonal resource regions.

According to the method of the above embodiment, there may be an advantage that measurement of a reception power ratio between a target signal and an interference signal, which serves as a criterion when a base station applies (or performs) an interference cancellation scheme (or operation) such as non-orthogonal multiple access (NOMA), can be supported.

The above [Proposal #10] may be applied in combination with a method(s) of another proposal within a range in which operations of the disclosure do not conflict.

### [Proposal #11]

According to an embodiment of the present disclosure, when a network can (pre-)configure and/or (pre-)define, for a UE, a cluster composed of a plurality of cells, a method may be provided for supporting a cell cooperation-based UE-to-base station communication (e.g., uplink) interference cancellation scheme (or operation) including one or more of the following processes.
(1) configuration of a cooperation target cell and/or cooperation cell(s) within a cluster. For example, a network may (pre-)configure and/or (pre-)define cooperation cell(s) for a cooperation target cell within the cluster.
(2) exchange of UE-to-base station communication (e.g., uplink) interference cell list information within a cluster. For example, a cooperation target cell within the cluster may transmit, to cooperation cell(s), an interference cell list for which UE-to-base station communication (e.g., uplink) interference influence is expected.
(3) configuration of transmission for inter-cell cooperation within a cluster. For example, a network may configure a UE, at a time of UE-to-base station transmission (e.g., uplink transmission), to transmit by including control information related to UE-to-base station communication (e.g., uplink) scheduling in a form enabling demodulation of data at cooperation cell(s).
(4) interference cancellation based on inter-cell cooperation within a cluster. For example, when cooperation cell(s) within the cluster detect UE-to-base station transmission (e.g., uplink transmission) in an interference cell list, the cooperation cell(s) may attempt demodulation of data for the UE-to-base station transmission (e.g., uplink transmission) and may transmit a result thereof to a cooperation target cell. For example, when the cooperation target cell within the cluster receives a demodulation result for interference data, the cooperation target cell may remove the interference data from its received signal.

Here, for example, the cluster may refer to a cluster for a service discovery purpose and/or a cluster for an interference coordination purpose.

Here, for example, as a transmission configuration for cooperation within a cluster, control information related to UE-to-base station communication (e.g., uplink) scheduling, which is transmitted by a UE by including it in UE-to-base station transmission (e.g., uplink transmission), may be transmitted in a form decodable at an arbitrary cell that supports a UE-to-base station communication (e.g., uplink) cooperative reception mode within the cluster.

Here, for example, as a transmission configuration for cooperation within a cluster, control information related to UE-to-base station communication (e.g., uplink) scheduling, which is transmitted by a UE by including it in UE-to-base station transmission (e.g., uplink transmission), may be transmitted using resources distinguished from UE-to-base station communication (e.g., uplink) data in a time domain, and may be transmitted prior to the UE-to-base station communication (e.g., uplink) data.

Here, for example, as a transmission configuration for cooperation within a cluster, control information related to UE-to-base station communication (e.g., uplink) scheduling, which is transmitted by a UE by including it in UE-to-base station transmission (e.g., uplink transmission), may include identification information for a scheduling cell and/or a target receiving cell. For example, the control information may include a cluster identifier and/or a cell identifier and/or a cluster member identifier.

Here, for example, a network may differently configure a processing time and/or a transmission timing for a transmission channel to which a cooperation-based UE-to-base station communication (e.g., uplink) interference cancellation scheme (or operation) may be applied (or performed).

Here, for example, the proposed method may be applied (differently) per (a UE's) altitude and/or per a reception strength of a (base station-to-UE communication (e.g., downlink)) reference signal.

In a mobile communication system according to an embodiment of the present disclosure, when it is assumed that a (terrestrial) network (or a base station) provides a service for an aerial UE (e.g., unmanned aerial vehicle (UAV)) and/or a terrestrial UE (e.g., handheld device), the network may support a function such as three-dimensional mobility support and/or UE-to-base station communication (e.g., uplink)/base station-to-UE communication (e.g., downlink) interference coordination as part of a service for the aerial UE and/or the terrestrial UE, and a cluster composed of a plurality of base station(s) (or cell(s)) may be (pre-)defined and/or (pre-)configured as a unit for supporting the function(s).

Here, a network may apply (or perform) an interference coordination method (or operation) for UE-to-base station communication (e.g., uplink) and/or base station-to-UE communication (e.g., downlink) within a cluster.

For example, when receiving UE-to-base station communication (e.g., uplink), a plurality of cells within a cluster may perform cooperative reception to remove UE-to-base station communication (e.g., uplink) interference. For example, a network may (pre-)configure and/or (pre-)define cooperation cell(s) for a cooperation target cell within the cluster. Here, the cooperation target cell within the cluster may transmit, to the cooperation cell(s), an interference cell list for which UE-to-base station communication (e.g., uplink) interference influence is expected.

Here, a network may configure a UE, at a time of UE-to-base station transmission (e.g., uplink transmission), to transmit by including control information related to UE-to-base station communication (e.g., uplink) scheduling in a form enabling demodulation of data at cooperation cell(s). Here, when cooperation cell(s) within a cluster detect UE-to-base station transmission (e.g., uplink transmission) in an interference cell list, the cooperation cell(s) may attempt demodulation of data for the UE-to-base station transmission (e.g., uplink transmission) and may transmit a result thereof to a cooperation target cell. Here, when the cooperation target cell within the cluster receives a demodulation result for interference data, the cooperation target cell may remove the interference data from its received signal.

According to the proposed method of the present disclosure, cell(s) within a cluster that do not have their own scheduling may opportunistically support a cooperative reception operation for interference cancellation of other cell(s), and thereby an effect of mitigating UE-to-base station communication (e.g., uplink) interference within the cluster may be obtained.

For example, as a variation of the proposed method, when a network can (pre-)configure and/or (pre-)define, for a UE, a cluster composed of a plurality of cells, a method may be considered for supporting a cell cooperation-based UE-to-base station communication (e.g., uplink) reception scheme including one or more of the following processes.
(1) configuration of a cooperation target cell and/or cooperation cell(s) within a cluster. For example, a network may (pre-)configure and/or (pre-)define cooperation cell(s) for a cooperation target cell within the cluster.
(2) configuration of transmission for inter-cell cooperation within a cluster. For example, a network may configure a UE, at a time of UE-to-base station transmission (e.g., uplink transmission), to transmit by including control information related to UE-to-base station communication (e.g., uplink) scheduling in a form enabling demodulation of data at cooperation cell(s).
(3) inter-cell cooperation-based reception operation within a cluster. For example, when cooperation cell(s) within the cluster detect UE-to-base station transmission (e.g., uplink transmission) toward a cooperation target cell, the cooperation cell(s) may attempt demodulation of data for the UE-to-base station transmission (e.g., uplink transmission) and may transmit a result thereof to the cooperation target cell. For example, when the cooperation target cell within the cluster receives a demodulation result for its data from the cooperation cell(s), the cooperation target cell may use the result to improve a data demodulation quality.

The above [Proposal #11] may be applied in combination with a method(s) of another proposal within a range in which operations of the disclosure do not conflict.

### [Proposal #12]

According to an embodiment of the present disclosure, a method may be provided in which a UE senses an interference influence prior to a UE-to-base station transmission (e.g., uplink transmission) resource, and performs one or more of the following operations according to a sensing result.
(1) determination of whether to transmit on the corresponding resource according to an interference influence (omission of transmission or performance of transmission).
(2) reporting a measurement result for an interference influence to a network.

Here, for example, the network may configure, for a UE, a plurality of UE-to-base station transmission (e.g., uplink transmission) resource candidates, and the UE may transmit UE-to-base station communication (e.g., uplink) on one or more resources among the plurality of UE-to-base station transmission (e.g., uplink transmission) resource candidates according to a sensing result.

Here, for example, the UE may sense an interference influence based on a beam (or a spatial filter) corresponding to a reverse direction of a beam (or a spatial filter) for UE-to-base station transmission (e.g., uplink transmission). Alternatively, for example, the UE may set a beam (or a spatial filter) in a reception direction of a base station based on a location of the UE and a location of a serving base station, and then may sense the interference influence.

Here, for example, the proposed method may be applied (differently) per (a UE's) altitude and/or per a reception strength of a (base station-to-UE communication (e.g., downlink)) reference signal.

In a mobile communication system according to an embodiment of the present disclosure, when it is assumed that a (terrestrial) network (or a base station) provides a service for an aerial UE (e.g., unmanned aerial vehicle (UAV)) and/or a terrestrial UE (e.g., handheld device), UE-to-base station transmission (e.g., uplink transmission) of a second aerial UE, which is another aerial UE, may act as interference to UE-to-base station transmission (e.g., uplink transmission) of a first aerial UE.

Here, the first aerial UE may perform sensing for an interference influence before its transmission of UE-to-base station communication (e.g., uplink) resource, and then, according to a determination of the UE itself, may omit UE-to-base station transmission (e.g., uplink transmission) or may report the interference influence to its serving base station (or a network).

Here, in order to measure an interference influence of UE-to-base station communication (e.g., uplink) of a second aerial UE on its serving base station, the first aerial UE may sense an interference level based on a beam (or a spatial filter) corresponding to a reverse direction of a beam (or a spatial filter) for its UE-to-base station transmission (e.g., uplink transmission). Alternatively, for example, the UE may set a beam (or a spatial filter) in a reception direction of a base station based on a location of the UE and a location of a serving base station, and then may sense the interference influence.

According to the method of the above embodiment, a UE may actively cope with UE-to-base station communication (e.g., uplink) interference to determine resource transmission by itself or report an interference influence to a base station.

The above [Proposal #12] may be applied in combination with a method(s) of another proposal within a range in which operations of the disclosure do not conflict.

### [Proposal #13]

According to an embodiment of the present disclosure, when a network can (pre-)configure and/or (pre-)define, for a UE, a cluster composed of a plurality of cell(s) for one or more of the following purposes, a method may be provided in which the cluster is (pre-)configured and/or (pre-)defined based on (a UE's) altitude and/or a reception strength of a (base station-to-UE communication (e.g., downlink)) reference signal.
(1) service discovery purpose (for example, an initial access cell group)
(2) UE-to-base station communication (e.g., uplink) interference coordination purpose (or air-to-ground interference coordination purpose)
(3) base station-to-UE communication (e.g., downlink) interference coordination purpose (or ground-to-air interference coordination purpose)

Here, UE-to-base station communication (e.g., uplink) interference (or air-to-ground interference) may refer to an interference influence of UE-to-base station communication (e.g., uplink) of an aerial UE on UE-to-base station communication (e.g., uplink) of a terrestrial UE and/or (another) aerial UE.

Here, base station-to-UE communication (e.g., downlink) interference (or ground-to-air interference) may refer to an interference influence of base station-to-UE communication (e.g., downlink) of a terrestrial UE and/or an aerial UE on base station-to-UE communication (e.g., downlink) of (another) aerial UE.

Here, the network may (pre-)configure and/or (pre-)define a cluster independently for each purpose, or may (pre-)configure and/or define the same cluster for a plurality of purpose(s). For example, when a cluster for another purpose is not (pre-)configured and/or defined in addition to a cluster for a service discovery purpose (hereinafter, a first cluster), a UE may assume that the first cluster is also used as a cluster for an interference coordination purpose.

Here, for example, the network may inform a UE of a purpose and/or a use of cluster configuration.

Here, for example, the network may transmit, to a UE, a cluster-specific transmission configuration and/or a cell-specific transmission configuration in a distinguished manner.

Here, for example, the (base station-to-UE communication (e.g., downlink)) reference signal may refer to a synchronization signal such as a Synchronization Signal Block (SSB), etc.

Here, for example, the proposed method may be applied (differently) per (a UE's) altitude and/or per a reception strength of the (base station-to-UE communication (e.g., downlink)) reference signal.

In a mobile communication system according to an embodiment of the present disclosure, when it is assumed that a (terrestrial) network (or a base station) provides a service for an aerial UE (e.g., unmanned aerial vehicle (UAV)) and/or a terrestrial UE (e.g., handheld device), the service for the aerial UE, unlike a conventional wireless environment in which only a service for a terrestrial UE is supported, may cause a new type of UE-to-base station communication (e.g., uplink) interference and/or base station-to-UE communication (e.g., downlink) interference.

For example, a UE-to-base station signal (e.g., uplink signal) transmitted by an aerial UE to a (terrestrial) base station (or a cell) may act as UE-to-base station communication (e.g., uplink) interference to other (terrestrial) base station(s) (or cell(s)) other than a (terrestrial) base station (or a cell) serving the aerial UE (e.g., air-to-ground interference).

For example, a base station-to-UE communication (e.g., downlink) signal (for example, side lobes of a base station-to-UE communication (e.g., downlink) beam) transmitted by a (terrestrial) base station (or a cell) to an aerial UE and/or a terrestrial UE may act as base station-to-UE communication (e.g., downlink) interference to another aerial UE other than a UE served by the (terrestrial) base station (or the cell) (e.g., ground-to-air interference).

Here, for example, interference according to support of the aerial UE service may affect a plurality of (terrestrial) base station(s) (or cell(s)) within a specific region. Accordingly, a method is proposed in which a plurality of (terrestrial) base station(s) (or cell(s)) affected by the interference according to the aerial UE service are (pre-)configured and/or (pre-)defined as one cluster, and a network and/or a UE apply (or perform) an interference coordination scheme (or operation) and/or an interference mitigation scheme (or operation) within the cluster (and the method may be preferable in consideration of the situation described above).

Here, the cluster may be (pre-)defined, and an aerial UE, etc. may identify it through a service discovery process. Here, the cluster may be (pre-)configured and/or (pre-)defined per (a UE's) altitude and/or per a reception strength of the (base station-to-UE communication (e.g., downlink)) reference signal.

For example, for a first altitude range, an interference cooperation purpose cluster cell group 1 and an initial access cell group X may be configured and/or defined, and for a second altitude range, an interference cooperation purpose cluster cell group 2 and an initial access cell group Y may be configured and/or defined.

According to the method of the above embodiment, a network and/or a UE may control interference according to the aerial UE service within a cluster that is clearly agreed upon and/or defined among each other, and there is an advantage that the cluster can be managed per (a UE's) altitude and/or per a reception strength of the (base station-to-UE communication (e.g., downlink)) reference signal.

The above [Proposal #13] may be applied in combination with a method(s) of another proposal within a range in which operations of the disclosure do not conflict.

### [Proposal #14]

According to an embodiment of the present disclosure, when a network may apply (or perform), for a UE, a sensing-based interference coordination scheme (or operation) as a base station-to-UE communication (e.g., downlink) and/or UE-to-base station communication (e.g., uplink) interference coordination scheme (or operation), a method may be provided in which (pre-)configuration and/or (pre-)definition for the sensing are configured and/or defined per (a UE's) altitude and/or per a reception strength of the (base station-to-UE communication (e.g., downlink)) reference signal.

Here, the (pre-)configuration and/or (pre-)definition for the sensing may include configuration and/or definition of physical resources for the sensing.

Here, for example, the sensing process may include detection for resource reservation information and/or measurement of an estimated interference strength caused by the corresponding link.

Here, here, for example, the method may be applied to both dynamic grant (DG)-based scheduling and/or configured grant (CG)-based scheduling.

Here, here, for example, the proposed method may be applied (differently) per (a UE's) altitude and/or per a reception strength of the (base station-to-UE communication (e.g., downlink)) reference signal.

In a mobile communication system according to an embodiment of the present disclosure, when it is assumed that a (terrestrial) network (or a base station) provides a service for an aerial UE (e.g., unmanned aerial vehicle (UAV)) and/or a terrestrial UE (e.g., handheld device), the service for the aerial UE, unlike a conventional wireless environment in which only a service for a terrestrial UE is supported, may cause a new type of UE-to-base station communication (e.g., uplink) interference and/or base station-to-UE communication (e.g., downlink) interference.

For example, a UE-to-base station signal (e.g., uplink signal) transmitted by an aerial UE to a (terrestrial) base station (or a cell) may act as UE-to-base station communication (e.g., uplink) interference to other (terrestrial) base station(s) (or cell(s)) other than a (terrestrial) base station (or a cell) serving the aerial UE (e.g., air-to-ground interference).

For example, a base station-to-UE communication (e.g., downlink) signal (for example, side lobes of a base station-to-UE communication (e.g., downlink) beam) transmitted by a (terrestrial) base station (or a cell) to an aerial UE and/or a terrestrial UE may act as base station-to-UE communication (e.g., downlink) interference to another aerial UE other than a UE served by the (terrestrial) base station (or the cell) (e.g., ground-to-air interference).

Here, interference according to support of the aerial UE service may affect a plurality of (terrestrial) base station(s) (or cell(s)) within a specific region. Here, the network may operate a sensing-based interference coordination scheme (or operation) in which the aerial UE senses interference and, according to a sensing result, controls transmit power and/or a transmission beam direction, etc.

Here, configuration and/or definition for sensing for the UE may be provided per (a UE's) altitude and/or per a reception strength of the (base station-to-UE communication (e.g., downlink)) reference signal.

For example, sensing resources for the interference coordination purpose sensing may be configured and/or defined differently per (a UE's) altitude and/or per a reception strength of the (base station-to-UE communication (e.g., downlink)) reference signal.

According to the method of the above embodiment, there is an advantage that sensing resources and/or configurations can be distinguished per (a UE's) altitude and/or per a reception strength to refine measurement of an interference influence.

The above [Proposal #14] may be applied in combination with a method(s) of another proposal within a range in which operations of the disclosure do not conflict.

For example, an object moving in air, including an unmanned aerial vehicle (UAV) and/or a drone, etc. may also perform communication, and since a plurality of line of sight (LOS) links between the object moving in air and other communication objects can be secured, a plurality of line of sight (LOS) links between the object moving in air and a plurality of base stations among existing terrestrial base stations can also be secured, which may mean that UE-to-base station communication (or base station-to-UE communication) performed in association with an individual cell may cause significant interference to another cell. For example, interference occurring in a communication operation may refer to a degree of disturbance that a performed transmission may cause to a reception operation of a scheduled transmission by being received by an object for which the performed transmission is not intended, when the object performs a monitoring operation to receive another scheduled transmission.

For example, UAV may perform a role of a relay node that provides a communication service within the mobile communication system and/or a role of a UE node that is provided with a communication service within the mobile communication system. Here, when the aerial UE is served by a terrestrial network, unlike a conventional wireless environment in which only a terrestrial UE is served, a new type of UE-to-base station communication (e.g., UL link) interference and/or base station-to-UE communication (e.g., DL link) interference may be caused.

For example, a UE-to-base station communication (e.g., UL link) signal transmitted by an aerial UE to a (terrestrial) base station (or a cell) may cause UE-to-base station communication (e.g., UL link) interference to other (terrestrial) base station(s) (or cell(s)) other than a (terrestrial) base station (or a cell) serving the aerial UE (e.g., air-to-ground (Air-to-Ground) interference). Alternatively, for example, a base station-to-UE communication (e.g., DL link) signal transmitted by a (terrestrial) base station (or a cell) to an aerial UE and/or a terrestrial UE may cause base station-to-UE communication (e.g., DL link) interference to another aerial UE other than a UE served by the (terrestrial) base station (or the cell) (e.g., ground-to-air (Ground-to-Air) interference).

According to an embodiment of the present disclosure, in order to mitigate multi-cell-related interference due to characteristics of the aerial UE described above, a cluster composed of a plurality of cells may be newly defined, and an operation for mitigating interference caused by the characteristics of the aerial UE may be provided by using the cluster. For example, according to the present disclosure, in a next-generation communication system, a cluster composed of a plurality of cells is configured and/or defined for interference coordination between air and ground, and a method is proposed in which a resource partitioning and/or sensing and/or cooperation transmission-based interference coordination scheme is applied within the cluster.

For example, the proposed method may include a scheme for specifying a position and/or a cell to be targeted by a beam of UE-to-base station communication (e.g., UL link) of an aerial UE within a cluster, a scheme for distinguishing and configuring a first resource region usable by both an aerial UE and a terrestrial UE within the cluster and a second resource region dedicated to a terrestrial UE, a sensing and/or reservation-based air-to-ground interference coordination scheme when performing UE-to-base station communication (e.g., UL link) and/or base station-to-UE communication (e.g., DL link) transmission within the cluster, and a scheme for demodulation of interference data and application of interference cancellation (IC) at cooperation cell(s) when performing UE-to-base station communication (e.g., UL link) and/or base station-to-UE communication (e.g., DL link) transmission within the cluster, etc.

By enabling an interference coordination operation to be performed within a cluster including a plurality of cells, coordination of interference that may be caused by UE-to-base station communication performed by an aerial UE may be achieved, and as a result, efficient communication of the aerial UE may be enabled.

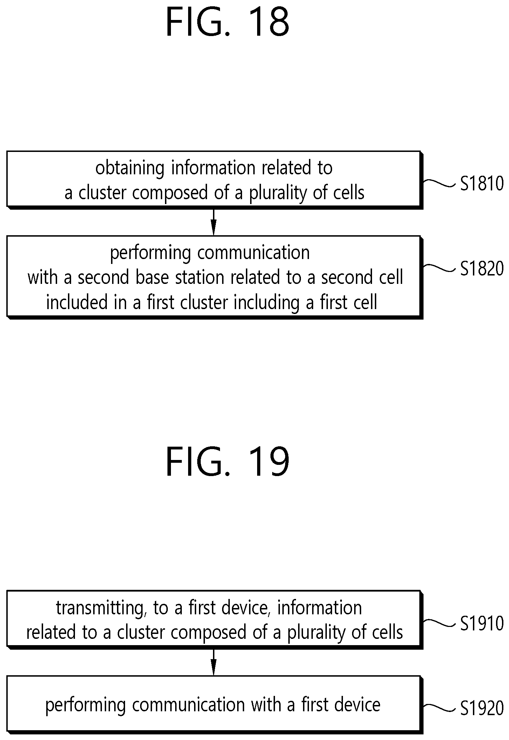

FIG. 18 shows a procedure of a method that can be performed by a first device, according to an embodiment of the present disclosure. The embodiment of FIG. 18 can be combined with various embodiments of the present disclosure.

Referring to FIG. 18, in step S1810, a first device may obtain information related to a cluster composed of a plurality of cells. In step S1820, the first device may perform communication with a second base station related to a second cell included in a first cluster including a first cell. For example, the information related to the cluster may include information related to a cluster size, and the size of the first cluster may be determined based on the information related to the cluster size and an altitude of a first device.

For example, the first cell may be the same as the second cell.

For example, the information related to the cluster may include target information of a transmission beam that is to be used for the communication.

For example, the information related to the cluster may be information related to the first cluster, and the information related to the first cluster may include information related to a purpose of the first cluster.

For example, additionally, the first device may receive information related to a plurality of transmission beams; perform a first transmission, to a first base station related to the first cell, based on the plurality of transmission beams; and receive, from the first base station, information related to a first beam. For example, the communication may be performed based on the first beam, the first beam may be a beam related to the first cluster, and the first beam may be determined based on the first transmission by the first base station.

For example, the first transmission may be a reference signal transmission.

For example, additionally, the first device may perform an interference coordination operation. For example, the communication may be performed based on the interference coordination operation.

For example, the information related to the cluster may include information for a first resource region on which the interference coordination operation is performed and information for a second resource region on which the interference coordination operation is not performed, the communication may be performed on the first resource region, and the interference coordination operation may be performed based on the communication being performed in the first resource region.

For example, the interference coordination operation may comprise: receiving, from a first base station related to the first cell, resource information; and transmitting the resource information.

For example, the resource information transmitted by the first device may be received by a second device within the first cluster based on a sensing operation, and the resource information transmitted by the first device may be reported to a third base station related to a third cell included in the first cluster, by the second device.

For example, the resource information transmitted by the first device may be received by a third base station related to a third cell included in the first cluster, based on a sensing operation.

For example, the communication may include a device-to-base station transmission, and the device-to-base station transmission may include a transmission of control information including identifier information related to the first cluster.

The above-described embodiment may be applied to various devices described below. First, a processor 102 of a first device 100 may obtain information related to a cluster composed of a plurality of cells. And, the processor 102 of the first device 100 may control a transceiver 106 to perform communication with a second base station 400 related to a second cell included in a first cluster including a first cell. For example, the information related to the cluster may include information related to a cluster size, and the size of the first cluster may be determined based on the information related to the cluster size and an altitude of a first device 100.

According to an embodiment of the present disclosure, a first device may be proposed. For example, the first device may comprise: at least one transceiver; at least one processor; and at least one memory connected to the at least one processor and storing instructions. For example, the instructions, based on being executed by the at least one processor, may cause the first device to: obtain information related to a cluster composed of a plurality of cells; and perform communication with a second base station related to a second cell included in a first cluster including a first cell, wherein the information related to the cluster may include information related to a cluster size, and wherein the size of the first cluster may be determined based on the information related to the cluster size and an altitude of the first device.

For example, the first cell may be the same as the second cell.

For example, the information related to the cluster may include target information of a transmission beam that is to be used for the communication.

For example, the information related to the cluster may be information related to the first cluster, and the information related to the first cluster may include information related to a purpose of the first cluster.

For example, additionally, the instructions may cause the first device to: receive information related to a plurality of transmission beams; perform a first transmission, to a first base station related to the first cell, based on the plurality of transmission beams; and receive, from the first base station, information related to a first beam. For example, the communication may be performed based on the first beam, the first beam may be a beam related to the first cluster, and the first beam may be determined based on the first transmission by the first base station.

For example, the first transmission may be a reference signal transmission.

For example, additionally, the instructions may cause the first device to: perform an interference coordination operation. For example, the communication may be performed based on the interference coordination operation.

For example, the information related to the cluster may include information for a first resource region on which the interference coordination operation is performed and information for a second resource region on which the interference coordination operation is not performed, the communication may be performed on the first resource region, and the interference coordination operation may be performed based on the communication being performed in the first resource region.

For example, the interference coordination operation may comprise: receiving, from a first base station related to the first cell, resource information; and transmitting the resource information.

For example, the resource information transmitted by the first device may be received by a second device within the first cluster based on a sensing operation, and the resource information transmitted by the first device may be reported to a third base station related to a third cell included in the first cluster, by the second device.

For example, the resource information transmitted by the first device may be received by a third base station related to a third cell included in the first cluster, based on a sensing operation.

For example, the communication may include a device-to-base station transmission, and the device-to-base station transmission may include a transmission of control information including identifier information related to the first cluster.

According to an embodiment of the present disclosure, a processing device adapted to control a first device may be proposed. For example, the processing device may comprise: at least one processor; and at least one memory connected to the at least one processor and storing instructions, wherein the instructions, based on being executed by the at least one processor, may cause the first device to: obtain information related to a cluster composed of a plurality of cells; and perform communication with a second base station related to a second cell included in a first cluster including a first cell, wherein the information related to the cluster may include information related to a cluster size, and wherein the size of the first cluster may be determined based on the information related to the cluster size and an altitude of the first device.

According to an embodiment of the present disclosure, a non-transitory computer-readable storage medium storing instructions that, based on being executed, cause a first device to: obtain information related to a cluster composed of a plurality of cells; and perform communication with a second base station related to a second cell included in a first cluster including a first cell, wherein the information related to the cluster may include information related to a cluster size, and wherein the size of the first cluster may be determined based on the information related to the cluster size and an altitude of the first device.

FIG. 19 shows a procedure of a method that can be performed by a second device, according to an embodiment of the present disclosure. The embodiment of FIG. 19 can be combined with various embodiments of the present disclosure.

Referring to FIG. 19, in step S1910, a second device may transmit, to a first device, information related to a cluster composed of a plurality of cells. In step S1920, the second device may perform communication with the first device. For example, the communication may be performed by a first base station related to a first cell included in a first cluster, the information related to the cluster may include information related to a cluster size, and a size of the first cluster may be determined based on the information related to the cluster size and an altitude of the first device.

For example, the communication may be performed based on an interference coordination operation, and the information related to the cluster may include information for a first resource region on which the interference coordination operation is performed and information for a second resource region on which the interference coordination operation is not performed.

The above-described embodiment may be applied to various devices described below. First, a processor 202 of a second device 200 may control a transceiver 206 to transmit, to a first device 100, information related to a cluster composed of a plurality of cells. And, the processor 202 of the second device 200 may control the transceiver 206 to perform communication with the first device 100. For example, the communication may be performed by a first base station 300 related to a first cell included in a first cluster, the information related to the cluster may include information related to a cluster size, and a size of the first cluster may be determined based on the information related to the cluster size and an altitude of the first device 100.

According to an embodiment of the present disclosure, a second device may be proposed. For example, the second device may comprise: at least one transceiver; at least one processor; and at least one memory connected to the at least one processor and storing instructions. For example, the instructions, based on being executed by the at least one processor, may cause the second device to: transmit, to a first device, information related to a cluster composed of a plurality of cells; and perform communication with the first device, wherein the communication may be performed by a first base station related to a first cell included in a first cluster, wherein the information related to the cluster may include information related to a cluster size, and wherein a size of the first cluster may be determined based on the information related to the cluster size and an altitude of the first device.

For example, the communication may be performed based on an interference coordination operation, and the information related to the cluster may include information for a first resource region on which the interference coordination operation is performed and information for a second resource region on which the interference coordination operation is not performed.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

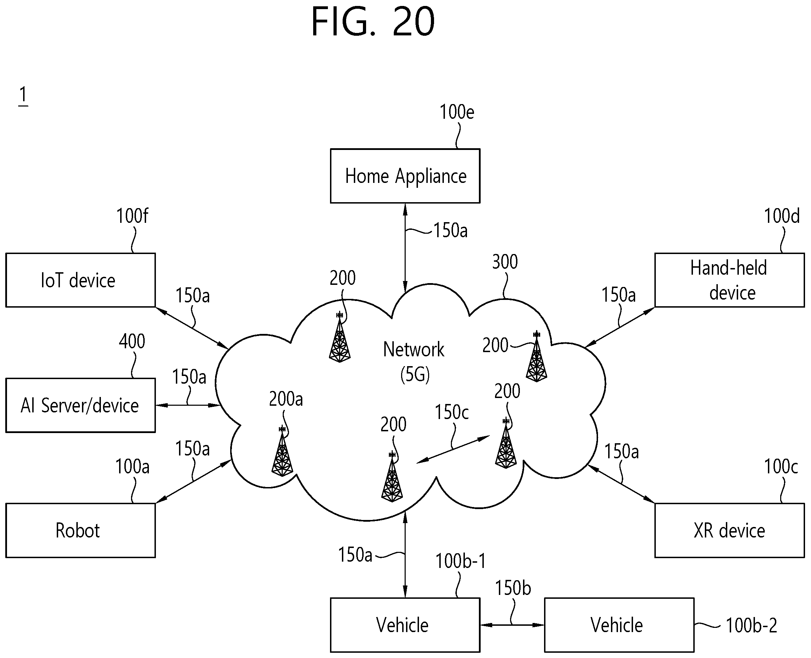

FIG. 20 shows a communication system 1, based on an embodiment of the present disclosure. The embodiment of FIG. 20 may be combined with various embodiments of the present disclosure.

Referring to FIG. 20, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

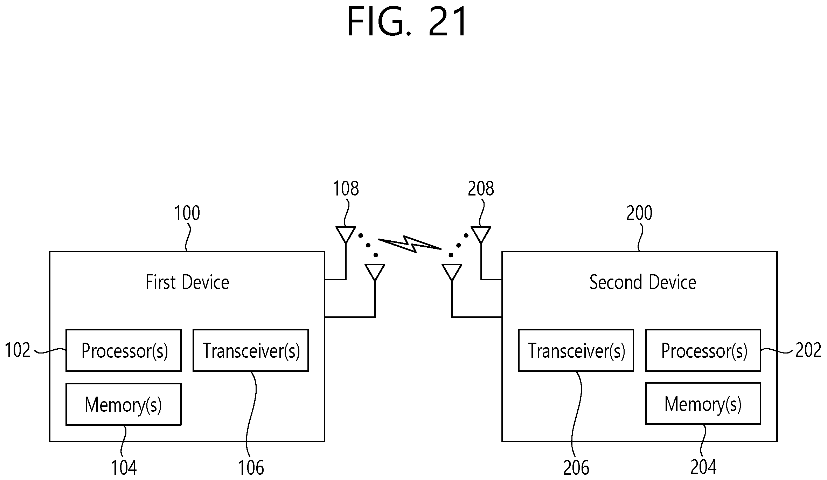

FIG. 21 shows wireless devices, based on an embodiment of the present disclosure. The embodiment of FIG. 21 may be combined with various embodiments of the present disclosure.

Referring to FIG. 21, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 20.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

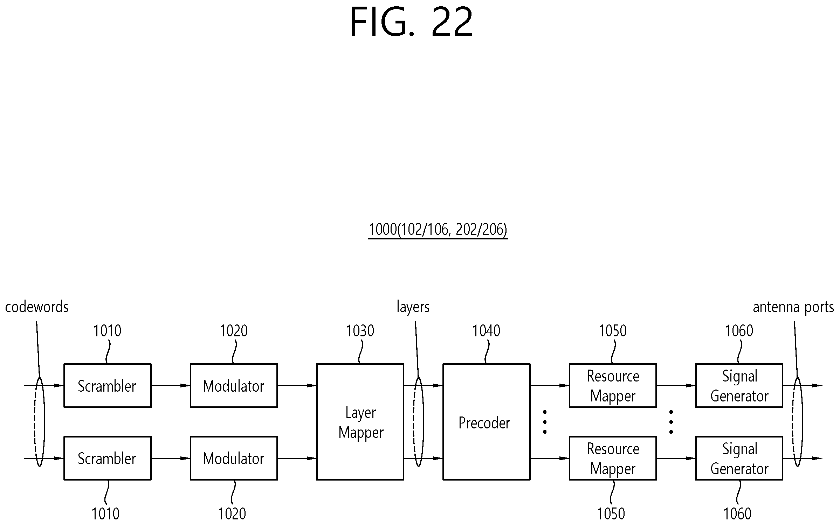

FIG. 22 shows a signal process circuit for a transmission signal, based on an embodiment of the present disclosure. The embodiment of FIG. 22 may be combined with various embodiments of the present disclosure.

Referring to FIG. 22, a signal processing circuit 1000 may include scramblers 1010, modulators 1020, a layer mapper 1030, a precoder 1040, resource mappers 1050, and signal generators 1060. An operation/function of FIG. 22 may be performed, without being limited to, the processors 102 and 202 and/or the transceivers 106 and 206 of FIG. 21. Hardware elements of FIG. 22 may be implemented by the processors 102 and 202 and/or the transceivers 106 and 206 of FIG. 21. For example, blocks 1010 to 1060 may be implemented by the processors 102 and 202 of FIG. 21. Alternatively, the blocks 1010 to 1050 may be implemented by the processors 102 and 202 of FIG. 21 and the block 1060 may be implemented by the transceivers 106 and 206 of FIG. 21.

Codewords may be converted into radio signals via the signal processing circuit 1000 of FIG. 22. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 22. For example, the wireless devices (e.g., 100 and 200 of FIG. 21) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

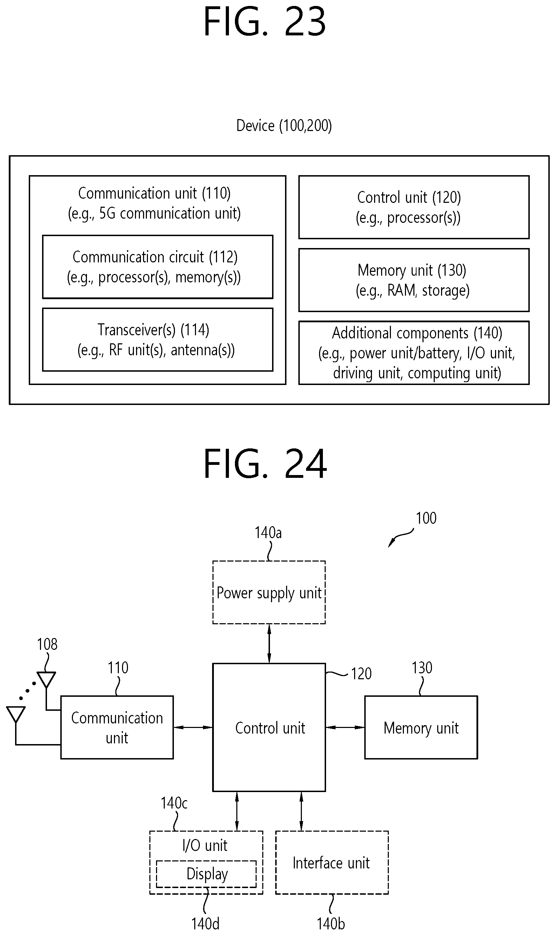

FIG. 23 shows another example of a wireless device, based on an embodiment of the present disclosure. The wireless device may be implemented in various forms according to a use-case/service (refer to FIG. 20). The embodiment of FIG. 23 may be combined with various embodiments of the present disclosure.

Referring to FIG. 23, wireless devices 100 and 200 may correspond to the wireless devices 100 and 200 of FIG. 21 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 21. For example, the transceiver(s) 114 may include the one or more transceivers 106 and 206 and/or the one or more antennas 108 and 208 of FIG. 21. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 20), the vehicles (100b-1 and 100b-2 of FIG. 20), the XR device (100c of FIG. 20), the hand-held device (100d of FIG. 20), the home appliance (100e of FIG. 20), the IoT device (100f of FIG. 20), a digital broadcast terminal, a hologram device, a public safety device, an MTC device, a medicine device, a fintech device (or a finance device), a security device, a climate/environment device, the AI server/device (400 of FIG. 20), the BSs (200 of FIG. 20), a network node, etc. The wireless device may be used in a mobile or fixed place according to a use-example/service.

In FIG. 23, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 23 will be described in detail with reference to the drawings.

FIG. 24 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless terminal (WT). The embodiment of FIG. 24 may be combined with various embodiments of the present disclosure.

Referring to FIG. 24, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 23, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

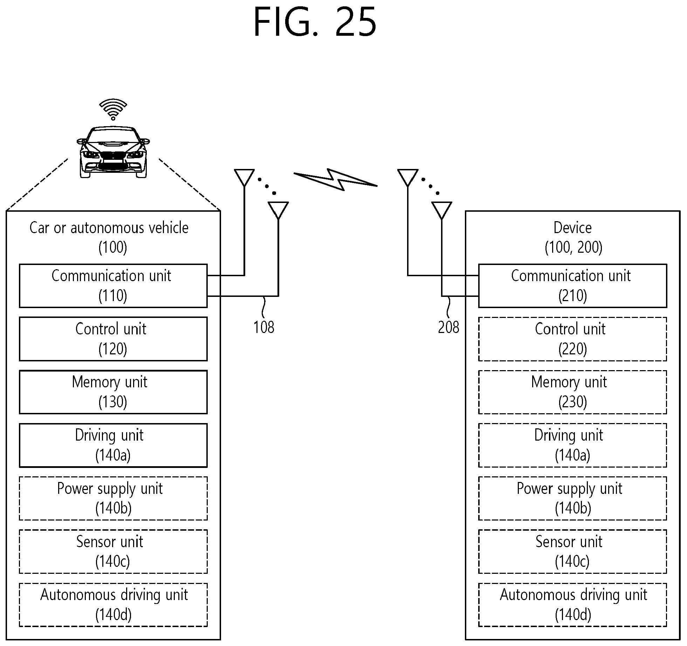

FIG. 25 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 25 may be combined with various embodiments of the present disclosure.

Referring to FIG. 25, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 23, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a conflict sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method comprising:
obtaining information related to a cluster composed of a plurality of cells; and
performing communication with a second base station related to a second cell included in a first cluster including a first cell,
wherein the information related to the cluster includes information related to a cluster size, and
wherein the size of the first cluster is determined based on the information related to the cluster size and an altitude of a first device.

2. The method of claim 1, wherein the first cell is the same as the second cell.

3. The method of claim 1, wherein the information related to the cluster includes target information of a transmission beam that is to be used for the communication.

4. The method of claim 1, wherein the information related to the cluster is information related to the first cluster, and
wherein the information related to the first cluster includes information related to a purpose of the first cluster.

5. The method of claim 1, further comprising:
receiving information related to a plurality of transmission beams;
performing a first transmission, to a first base station related to the first cell, based on the plurality of transmission beams; and
receiving, from the first base station, information related to a first beam,
wherein the communication is performed based on the first beam,
wherein the first beam is a beam related to the first cluster, and
wherein the first beam is determined based on the first transmission by the first base station.

6. The method of claim 5, wherein the first transmission is a reference signal transmission.

7. The method of claim 1, further comprising:
performing an interference coordination operation,
wherein the communication is performed based on the interference coordination operation.

8. The method of claim 7, wherein the information related to the cluster includes information for a first resource region on which the interference coordination operation is performed and information for a second resource region on which the interference coordination operation is not performed,
wherein the communication is performed on the first resource region, and
wherein the interference coordination operation is performed based on the communication being performed in the first resource region.

9. The method of claim 7, wherein the interference coordination operation comprises:
receiving, from a first base station related to the first cell, resource information; and
transmitting the resource information.

10. The method of claim 9, wherein the resource information transmitted by the first device is received by a second device within the first cluster based on a sensing operation, and
wherein the resource information transmitted by the first device is reported to a third base station related to a third cell included in the first cluster, by the second device.

11. The method of claim 9, wherein the resource information transmitted by the first device is received by a third base station related to a third cell included in the first cluster, based on a sensing operation.

12. The method of claim 1, wherein the communication includes a device-to-base station transmission, and
wherein the device-to-base station transmission includes a transmission of control information including identifier information related to the first cluster.

13. The method of claim 1, wherein the method is performed by the first device.

14. A first device comprising:
at least one transceiver;
at least one processor; and
at least one memory connected to the at least one processor and storing instructions,
wherein the instructions, based on being executed by the at least one processor, cause the first device to:
obtain information related to a cluster composed of a plurality of cells; and
perform communication with a second base station related to a second cell included in a first cluster including a first cell,
wherein the information related to the cluster includes information related to a cluster size, and
wherein the size of the first cluster is determined based on the information related to the cluster size and an altitude of the first device.

15. A processing device adapted to control a first device comprising:
at least one processor; and
at least one memory connected to the at least one processor and storing instructions,
wherein the instructions, based on being executed by the at least one processor, cause the first device to:
obtain information related to a cluster composed of a plurality of cells; and
perform communication with a second base station related to a second cell included in a first cluster including a first cell,
wherein the information related to the cluster includes information related to a cluster size, and
wherein the size of the first cluster is determined based on the information related to the cluster size and an altitude of the first device.

16. A non-transitory computer-readable storage medium storing instructions that, based on being executed, cause a first device to:
obtain information related to a cluster composed of a plurality of cells; and
perform communication with a second base station related to a second cell included in a first cluster including a first cell,
wherein the information related to the cluster includes information related to a cluster size, and
wherein the size of the first cluster is determined based on the information related to the cluster size and an altitude of the first device.

17. A method comprising:
transmitting, to a first device, information related to a cluster composed of a plurality of cells; and
performing communication with the first device,
wherein the communication is performed by a first base station related to a first cell included in a first cluster,
wherein the information related to the cluster includes information related to a cluster size, and
wherein a size of the first cluster is determined based on the information related to the cluster size and an altitude of the first device.

18. The method of claim 17, wherein the communication is performed based on an interference coordination operation, and
wherein the information related to the cluster includes information for a first resource region on which the interference coordination operation is performed and information for a second resource region on which the interference coordination operation is not performed.

19. A second device comprising:
at least one transceiver;
at least one processor; and
at least one memory connected to the at least one processor and storing instructions,
wherein the instructions, based on being executed by the at least one processor, cause the second device to:
transmit, to a first device, information related to a cluster composed of a plurality of cells; and
perform communication with the first device,
wherein the communication is performed by a first base station related to a first cell included in a first cluster,
wherein the information related to the cluster includes information related to a cluster size, and
wherein a size of the first cluster is determined based on the information related to the cluster size and an altitude of the first device.

20. The second device of claim 19, wherein the communication is performed based on an interference coordination operation, and
wherein the information related to the cluster includes information for a first resource region on which the interference coordination operation is performed and information for a second resource region on which the interference coordination operation is not performed.
